# EUROPEAN PATENT APPLICATION

(11) **EP 1 850 281 A1**
(43) Date of publication of application: **31.10.2007**
(21) Application number: 07008417.3
(22) Date of filing: 25.04.2007
(51) Int. Cl.: G06Q 10/00

(54) **System, terminal device and computer program product for ordering consumable supplies**

(30) Priority: 28.04.2006 JP 2006124851
(71) Applicant: Brother Kogyo Kabushiki Kaisha, Nagoya-shi, Aichi-ken 467-8561 (JP)
(72) Inventor: Nose, Tetsuya, Nagoya-shi Aichi-ken 467-8562 (JP); Ikedo, Tatsuhiro, Nagoya-shi Aichi-ken 467-8562 (JP)
(74) Representative: Feldmeier, Jürgen

(57) **Abstract**

A client PC (2) is arranged to receive store information on stores that sell media to be purchased from a management server (4), the store information including data on stocks of the media, store name and address, a unit price of media, a transportation cost (shipping cost), and time required. Based on the received store information, an image of a store information list (187) is created and displayed on a store retrieval screen (181) arranged in a store information display area (186).

## Description

### CROSS-REFERENCE TO RELATED APPLICATIONS

This application claims priority from JP 2006-124851, filed April 28, 2006, the contents of which are hereby incorporated by reference.

### BACKGROUND OF THE INVENTION

### 1. Field of the Invention

The present invention relates to a system for ordering consumable supplies for printers, a terminal device constituting the order system, and a computer program product to be used with the terminal device.

### 2. Description of Related Art

As to consumable supplies for portable devices usable outdoors such as a digital camera with printer, various order systems of the consumable supplies have heretofore been proposed. One of them is arranged to search and retrieve information on stores that sell the concerned consumable supplies when consumed to a predetermined quantity (number). This system is disclosed for example in Japanese patent application laid-open No. 2002-133278.

In the consumable-supplies order system disclosed in the above application '278, when it is detected that the consumable supplies or supplies such as print paper and ink have decreased in quantity or number to or below a predetermined value, information on a current location is sent from a portable communication device connected to a digital camera to an external server, the external server retrieves information on the stores that sell the concerned consumable supplies and sends back a retrieval result to the portable communication device. This makes it possible for a user to buy the consumable supplies conveniently and efficiently, and further to readily find available stores even in a location with which the user is unfamiliar.

The above application '278 recites various kinds of the store information, that is, store's business hours, business days, whether it is currently open or closed, a remaining business time before closing, discount information on consumable supplies, stock information on each supply, map information including the locations of available stores and the current location of a user, and a time required for visiting each store.

The above application '278 further discloses the following operations. Specifically, the user's location information is acquired by a global positioning system (GPS) locator equipped in the portable device. The store retrieval is directed to only the stores that sell the consumable supplies at special prices or the stores nearest the current location of the user. The store information may be displayed to show the stores not only in individual form but also in table form listing a plurality of available stores. Further, the store information may be viewed on a screen and printed.

The system disclosed in the above application '278 is designed by assuming only that a user who is using a digital camera outdoors immediately visits a store to purchase a required consumable supply of the digital camera when the supply runs out. Even where the consumable supply of the digital camera runs out, however, the user who uses the camera at home does not always need immediate purchase of the consumable supply and may buy it later. In that case, the user may buy the required supply by visiting a store or utilizing online or mail-order sales. Conventionally, such non-immediate purchase of consumable supplies has not been assumed. In these circumstances, there is a demand for a consumable-supplies order system available for both purchasing modes; a store purchase mode and an online purchase mode according to the necessity of immediate purchase of the consumable supplies by a user.

### SUMMARY OF THE INVENTION

The present invention has been made in view of the above circumstances and has an object to overcome the above problems and to provide a system, terminal device, and computer program product for ordering consumable supplies for a printer, whereby a user can obtain required information to purchase the consumable supplies even in either purchasing mode the user chooses according to the necessity of immediate purchase; a store purchase mode that the user visits a store to buy the consumable supplies or an online purchase mode that the user buys the consumable supplies online.

To achieve the purpose of the invention, there is provided a system for ordering consumable supplies, the system comprising a terminal device arranged to place an order for consumable supplies to be used in a printer, and a server connected to the terminal device via a network, wherein the terminal device includes: a display device that displays various kinds of information; an information transmitting device that transmits information on a type of a supply to be purchased and position information on a predetermined location to the server; a store information receiving device that receives store information on stores that sell the supply to be purchased, the information being transmitted from the server; a stock check device that displays the store information on each store in list form on the display device; an ordering device that creates purchase information that specifies one from among the stores on which store information received by the store information receiving device and specifies the order for the supply to the specified store; and a purchase information transmitting device that transmits the purchase information created by the ordering device to the server; the server includes a store information acquiring device that acquires the store information on stores that sell the supply to be purchased based on the information on the type of supply to be purchased and the position information on the predetermined location, the type information and the position information having been received from the terminal device, and the store information includes: for stores that do not adopt online sales, the name of each store that sells the supply, a unit price of the supply, information on stocks of the supply, information on a position of each store and a travel time from the predetermined location to each store, and for stores that adopt online sales, the name of each store that sells the supply, a unit price of the supply, information on stocks of the supply, shipping hours required to deliver the supply to be purchased, and a shipping cost of the supply to be purchased, and if the stores also adopt store sales, information on a transportation cost required from the predetermined location to each store.

With the above configuration, according to the necessary of immediate purchase of the consumable supplies, a user can obtain required information to buy the consumable supplies even in either mode; a store purchase mode that the user visits a store to buy the consumable supplies or an online purchase mode that the user buys the consumable supplies by utilizing online sales. The user can further view store information in list form and place an order to a specific one of the stores in the list. When the user intends to utilize the online sales, he/she can know a shipping time needed for delivery of a chosen consumable supply to the user and a shipping cost thereof. When the user intends to visit an actual store (a brick-and-mortar store), on the other hand, he/she can know a transportation cost required from a predetermined location to the store.

According to another aspect of the invention, there is provided a terminal device arranged to place an order for consumable supplies to be used in a printer, the terminal device comprising: a display device that displays various kinds of information; an information transmitting device that transmits information on a type of a supply to be purchased and position information on a predetermined location to the server via a network; a store information receiving device that receives store information on stores that sell the supply to be purchased, the store information being acquired by the server; a stock check device that displays the store information on each store in list form on the display device; an ordering device that creates purchase information that specifies one from among the stores on which store information received by the store information receiving device and specifies the order for the supply to the specified store; and a purchase information transmitting device that transmits the purchase information created by the ordering device to the server; the store information includes: for stores that do not adopt online sales, the name of each store that sells the supply, a unit price of the supply, information on stocks of the supply, information on a position of each store and a travel time from the predetermined location to each store, and for stores that adopt online sales, the name of each store that sells the supply, a unit price of the supply, information on stocks of the supply, shipping hours required to deliver the supply to be purchased, and a shipping cost of the supply to be purchased, and if the stores also adopt store sales, information on a transportation cost required from the predetermined location to each store.

Further, according to another aspect, the invention, there is provided a computer program product to be used and executed in a terminal device arranged to place an order for consumable supplies to be used in a printer, and the computer program product comprising: a recording medium readable by the terminal device; and a computer program stored in the recording medium readable by the terminal device; wherein the computer program comprises the steps of: transmitting information on the type of the consumable supply to be purchased and position information on a predetermined location to a server connected to the terminal device via a network; receiving store information on the stores that sell the supply to be purchased, the information being acquired by the server; displaying the store information on each store in list form; creating and ordering purchase information that specifies one from among the stores on which store information received and an order for the supply to the specified store; and sending the created purchase information to the server; the store information includes: for stores that do not adopt online sales, the name of each store that sells the supply, a unit price of the supply, information on stocks of the supply, and if the stores adopt store sales, information on a position of each store and a travel time from the predetermined location to each store, and for stores that adopt online sales, the name of each store that sells the supply, a unit price of the supply, information on stocks of the supply, shipping hours required to deliver the supply to be purchased, and a shipping cost of the supply to be purchased, and if the stores also adopt store sales, information on a transportation cost required from the predetermined location to each store.

Further developments of the invention are given in the dependent claims.

### BRIEF DESCRIPTION OF THE DRAWINGS

Fig. 1 is a schematic configuration view of an order system of a present embodiment;
Fig. 2 is a schematic configuration view of a label creating system constituting the order system to enable a user to create a label;
Fig. 3 is a functional block diagram of a client PC;
Fig. 4 is a functional block diagram of a tape printer;
Fig. 5 is a functional block diagram of a management server;
Fig. 6 is a schematic view showing a store information table;
Fig. 7 is a schematic view showing a model information table;
Fig. 8 is an image view of a print screen of a printer driver;
Fig. 9 is an image view of a screen for store retrieval;
Fig. 10 is an image view of a screen for address specification;
Fig. 11 is an image view of a screen for store map;
Fig. 12 is an image view of a screen for purchase processing;
Fig. 13 is an image view of a screen for purchase history;
Fig. 14 is a flowchart of a main processing in the client PC;
Fig. 15 is a flowchart of an address specification processing in the client PC;
Fig. 16 is a flowchart of a map/route display processing in the client PC;
Fig. 17 is a flowchart of a purchase processing in the client PC;
Fig. 18 is a flowchart of a history display processing in the client PC; and
Fig. 19 is a flowchart of a main processing in the management server.

### DETAILED DESCRIPTION OF THE PREFERRED EMBODIMENTS

A detailed description of preferred embodiments of an order system and a terminal device used in the order system of the present invention will now be given referring to the accompanying drawings.

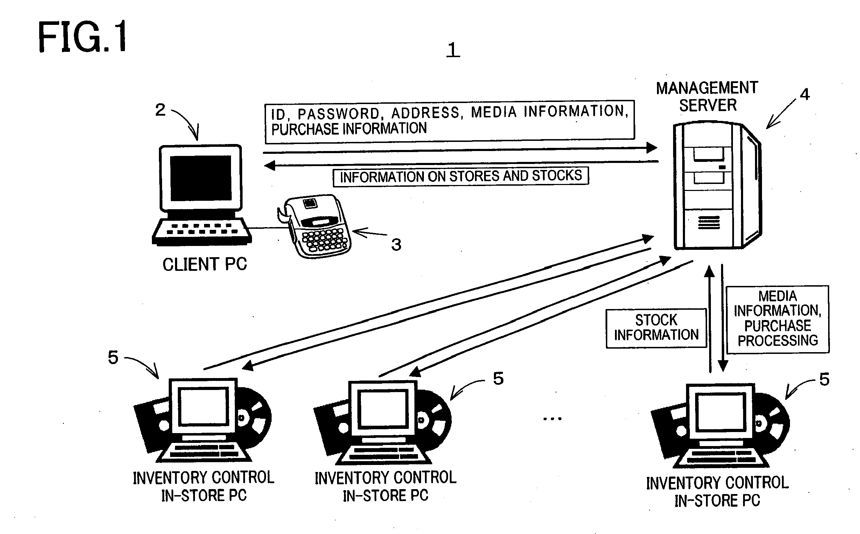

The order system of the present embodiment is explained referring to Fig. 1 through Fig. 19.

Fig. 1 is a schematic configuration view of the order system of the present embodiment. As shown in Fig. 1, the order system 1 of the present embodiment comprises a label creating system in which a client personal computer (PC) 2 used by a user to order supplies and a tape printer 3 which is provided with a tape cassette (a consumable supply) and connected to the client PC 2 through a cable. The client PC 2 is also connected to a management server 4 via a network (the Internet) not shown. Further, the order system 1 is arranged such that the management server 4 is connected to an inventory control in store PC 5 installed in each store via the network not shown. This inventory control in-store PC 5 serves as a PC for controlling stocks (inventory) of supplies dealt in at each store.

The order system 1 includes a plurality of the client PCs 2 and also a plurality of the inventory control in-store PCs 5 corresponding in number to the stores that adopt the concerned system 1.

As shown in Fig. 1, the client PC 2 transmits various kinds of information to the management server 4, for example, an ID and a PASSWORD for authentication, user's address and information on an ordered media for allowing the user to choose a store with which an order is placed, and purchase information in ordering a desired supply. Upon receipt of the above information, the management server 4 sends back store information on the stores that sell the concerned supply and stocks thereof in each store to the client PC 2.

The management server 4 transmits the media information for acquiring information on stocks of the media and requests a purchase processing to the inventory control in-store PC 5. This inventory control in-store PC 5 sends back the stock information and others to the management server 4.

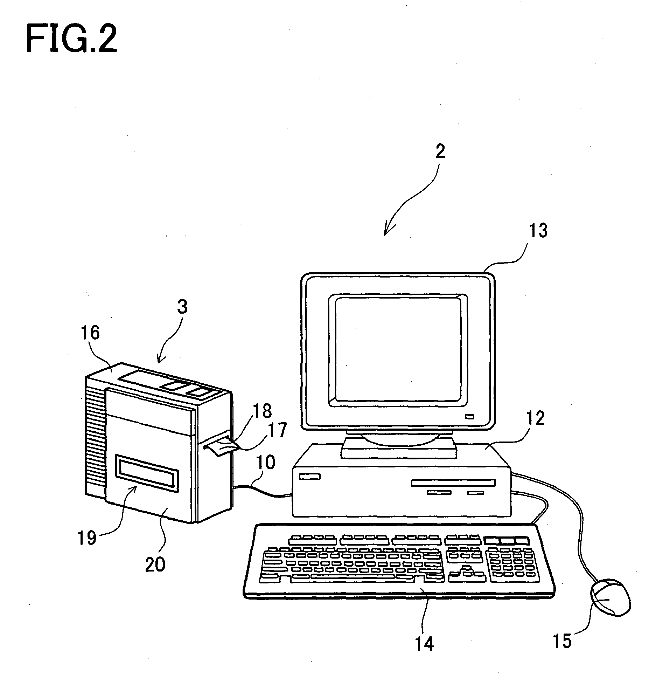

Fig. 2 is a schematic configuration view of a label creating system, constituting the order system of the present embodiment, for enabling a user to create a label.

As shown in Fig. 2, the client PC 2 and the tape printer 3 are connected by for example a USB cable 10 based on the USB standards or the like, allowing data transmission and reception. The client PC 2 is a well known PC, which comprises a main unit 12 containing a CPU not shown, a monitor 13, a keyboard 14, and a mouse 15 as shown in Fig. 2. The monitor 13, keyboard 14, and mouse 15 are connected individually to the main unit 12 by connection cables.

As shown in Fig. 2, the tape printer 3 includes a housing 16 of nearly rectangular parallelepiped shape which has a front wall (a right front side in Fig. 2) formed with an ejection port 18 through which a label 17 is ejected. The tape printer 3 is internally provided with a tape cassette storage part 19 inside the left side wall of the housing 16. The left side wall includes a cover 20 which is openable for allowing the tape cassette to be mounted in or demounted from the tape cassette storage part 19. This tape cassette storage part 19 is provided with a print mechanism including a thermal head composed of a plurality of heating elements and a platen roller held in contact with the thermal head, thereby printing on a tape which is caused to travel between those thermal head and platen roller. Thus, the tape housed in the tape cassette will be printed by the print mechanism, cut in a predetermined size by a tape cutter of the print mechanism, and then ejected as the label 17 through the ejection port 18.

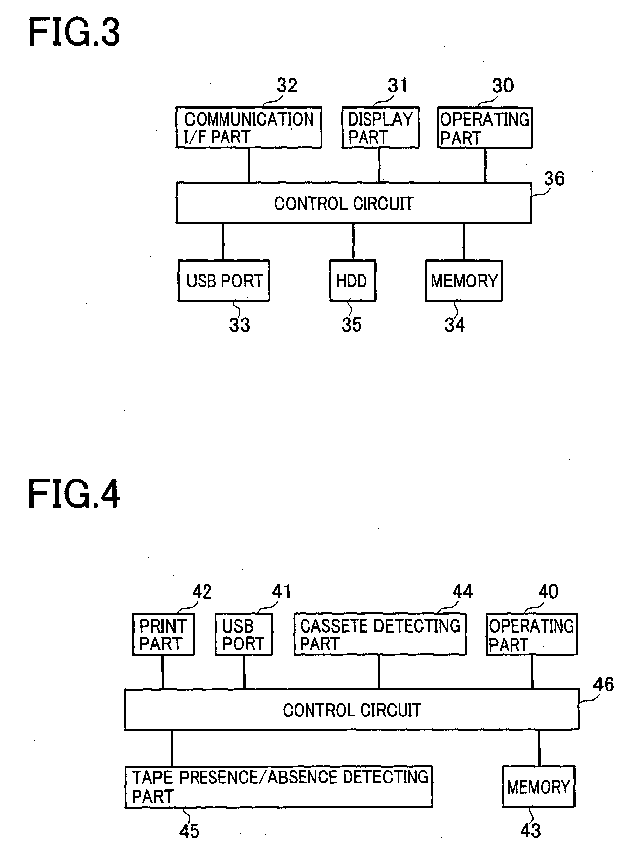

An electrical configuration of the client PC 2 is explained below referring to Fig. 3 which is a functional block diagram of the client PC 2.

As shown in Fig. 3, the client PC 2 is provided with an operating part 30 including the keyboard 14 (see Fig. 2) and the mouse 15 (see Fig. 2), a displaying part 31 such as a video controller not shown which includes the monitor 13 and controls displaying on the monitor 13, a communication I/F part 32 which gets on the network to transmit and receive data, a USB port 33 with which the USB cable is connected for communication based on the USB standards, and a memory 34 including ROM, RAM, flush ROM not shown for storing various kinds of data. The RAM of the memory 34 has work areas such as a transmission buffer for storing transmit data, a receive buffer for storing received data, a display buffer for expanding a display image, and others.

The ROM of the memory 34 has a BIOS storage area which stores a basic input output system (BIOS). The client PC 2 further comprises an HDD 35 having an OS storage area which stores an OS, a printer driver storage area which stores a printer driver program to execute print control, and a store retrieval program storage area which stores a store retrieval program to run a store retrieval application 180. The HDD 35 stores other programs and further includes a storage area which stores various kinds of program related information to which each program refers. This program related information includes a user ID, PASSWORD, an address registered by a user (hereinafter, referred to as a "registered address"), information on a station of public transport nearest the registered address (hereinafter, referred to as "registered station information"), and others.

The client PC 2 further includes a control circuit 36 having a CPU not shown for controlling each of the above parts.

An electrical configuration of the tape printer 3 is explained below referring to Fig. 4 which is a functional block diagram of the tape printer 3.

The tape printer 3 is a tape printer arranged to print on a tape by receiving print data containing a printing image in the bitmap format to be printed on the tape.

As shown in Fig. 4, the tape printer 3 is provided with an operating part 40 including a power key not shown, a tape forceful ejection key, and others, a USB port 41 with which a USB cable is connected for communication based on the USB standards, a print part 42 which includes a thermal head and a motor not shown to print on a tape, and a memory 43 including ROM, RAM, and flush ROM not shown for storing various kinds of data. The RAM of the memory 43 has work areas such as a transmission buffer for storing transmit data, a receive buffer for storing received data, a print buffer for expanding a print image, and others. The ROM of the memory 43 has a program storage area which stores a program to receive print data in the bitmap format and printing the bitmap data. The ROM of the memory 43 stores other programs and further includes a storage area which stores various kinds of program related information to which each program refers.

In the tape printer 3, a tape cassette not shown with wound tape as a print medium (a consumable supply) is mountable. The tape printer 3 is provided with a cassette detecting part 44 for detecting the type of the tape cassette and the presence or absence of the tape cassette in the tape printer 3. Each tape cassette is provided with a detected part (a part to be detected) representing the type of the tape cassette. This detected part of the tape cassette is formed with a plurality of small holes opening at the surface of the tape cassette. Combinations of the presence and absence of the small holes represent the types of tape cassettes. The cassette detecting part 44 of the tape printer 3 is provided with a plurality of mechanical switches arranged in positions that match the small holes of the detected part. Each mechanical switch is turned OFF if a corresponding small hole is present in the surface of the tape cassette, while it is turned ON if a corresponding small hole is absent. With these mechanical switches, accordingly, the tape printer 3 can determine the type of the tape cassette mounted therein.

The tape printer 3 is provided with a tape presence/absence detecting part 45 for detecting whether or not the wound tape in the tape cassette runs out. The material of a tape itself subject to printing is opaque, while one end of the tape in a lengthwise direction is followed by a transparent tape having a predetermined length. When tape is to be housed in the tape cassette, the transparent tape is first wound on a tape spool. In use, accordingly, the opaque print tape is first unreeled from the tape spool, and the transparent tape is unreeled after the print tape runs out. The tape presence/absence part includes an optical sensor of a transmission type placed in a feed path of the tape to detect whether the tape is transparent or opaque. Accordingly, the tape printer 3 can determine the presence/absence of the tape.

The tape printer 3 further includes a control circuit 46 having a CPU not shown for controlling each of the above parts.

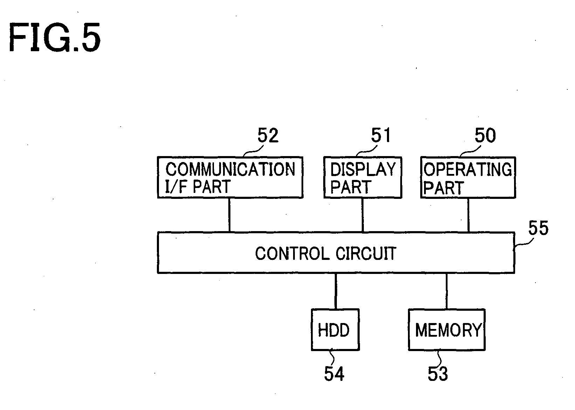

An electrical configuration of the management server 4 is explained below referring to Fig. 5 which is a functional block diagram of the management server 4.

As shown in Fig. 5, the management server 4 is provided with an operating part including a keyboard not shown, a display part 51 which displays various kinds of information, a communication I/F part 52 for connection to the network not shown, and a memory 53 including ROM, RAM, flush ROM not shown for storing various kinds of data. The RAM of the memory 53 has work areas such as a transmission buffer for storing transmit data, a receive buffer for storing received data, and others.

The ROM of the memory 53 has a BIOS storage area which stores a basic input output system (BIOS). The management server 4 further comprises an HDD 54 having an OS storage area which stores an OS and a server processing program storage area which stores a server processing program to analyze a predetermined request when comes in and executing processing to meet the analyzed request. This server processing program is a program designed to analyze a request to transmit predetermined data when comes from a client PC 2 and retrieve data that meets the analyzed request from a table mentioned later, send the retrieved data to the client PC 2 that issues the request, assist for data transmission/receipt and sales/purchases between the client PC 2 and an inventory control in-store PC, and execute other processings.

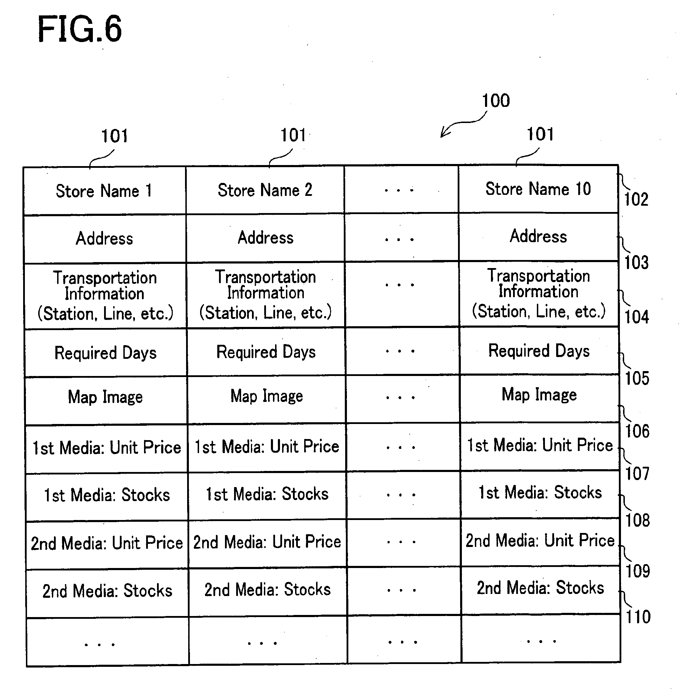

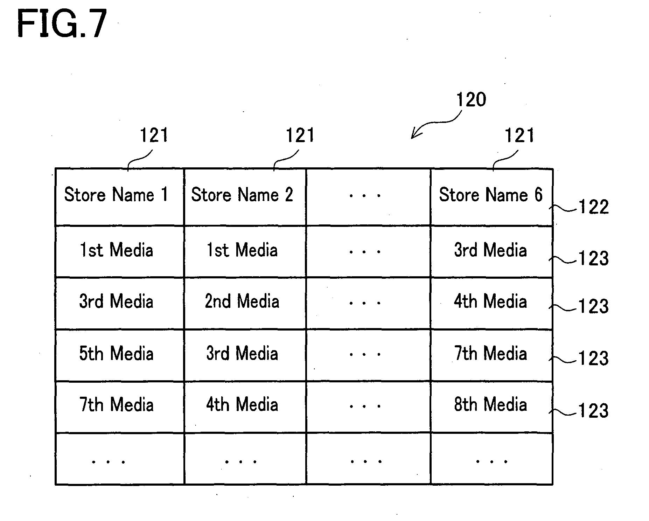

The HDD 35 stores a map retrieval program to retrieve information from a map database not shown to create an image of a map covering a specified region, a route retrieval program to retrieve information from a route database not shown to find a route for public transportation between specified two locations and a transportation cost charged for the route, an address conversion program to specify the direction and distance from a certain address to determine another address, and other programs. The HDD 35 further includes a storage area which stores various kinds of program related information to which each program refers. The program related information includes a store information database comprising a plurality of store information tables (see Fig. 6) and a plurality of product (model) information tables (see Fig. 7).

In the store information database, the stored store information tables (see Fig. 6) are classified by manufacturer and further by product such as a digital multifunction machine, a printer, a facsimile machine, and electronic stationery. In the model information database, the stored model information tables (see Fig. 7) are classified by manufacturer and further by product such as a digital multifunction machine, a printer, a facsimile machine, and electronic stationery.

The HDD 35 includes the map database from which the map retrieval program retrieves information and the route database from which the route retrieval program retrieves information.

The management 4 includes a control circuit 55 provided with a CPU not shown which controls the operation of each parts.

An electrical configuration of the inventory control in-store PC 5 is explained below. This PC 5 is almost identical in electrical configuration to the management server 4. Main differences of the PC 5 from the management server 4 are in data stored in the memory 53 and HDD 54. The HDD 54 stores an inventory control program to execute processing including controlling stocks of supplies (the inventory) at each store, send stock information in response to a request from the management server 4, accept an order for an supply transmitted via the management server 4, and other programs. In the memory 53, various parameters are stored to be used in execution of the inventory control program and other programs.

Referring to Fig. 6, the following explanation is made on a store information table in the store information database stored in the program related information storage area not shown of the HDD 35 in the management server 4. Fig. 6 is a schematic view showing the store information table for a certain product group belonging to a certain manufacturer.

As shown in Fig. 6, a store information table 100 includes records 101 each representing information on a store. Fig. 6 shows an example that there are ten stores in total that sell media for the certain product group belonging to the certain manufacturer. For ten stores, ten records 101 exist. A selling mode available at each store includes "store sales" that a store sells supplies at an actual (brick-and-mortar) store and "online sales" that a store sells supplies via a network. In the present embodiment, even a store adopting the store sales can accept an offer of purchase from a user who utilizes a store retrieval screen mentioned later. Costs are charged at that time. However, the ordered supply is not shipped so that the user visits the actual store to receive the supply. This selling mode is not included in the online sales in the present embodiment. Here, the "online sales" assumes a selling procedure from accepting an offer of purchase of supplies to shipping the purchased supplies. Some stores may adopt the online sales as well as the store sales. In this case, two records 101 are prepared for each of such stores.

A top field in each record 101 is a store name field 102 storing the name of a store. A second field following the top field is an address field 103 storing the address of the store. This address field 103 however indicates "Online" in the case where the selling mode adopted by the store is the online sales. A third field is a transportation information field 104 storing the type of means of public transport to go to a store in the case of the store sales and the name of a nearest station or bus stop. A fourth field is a required-days field 105 storing the days required for delivery of an ordered supply from an order in the case of the online sales. A fifth field is a map image field 106 storing image data on a map of a store and its vicinity. Only the stores adopting the store sales have image data on a map in this map image field 106.

In a sixth and subsequent fields, a unit price and the number of stocks of tape cassettes containing tape as media are continuously listed in pairs corresponding to the number of types of tape cassettes.

Here, the tape cassettes are referred to as a 1^{st} media, 2^{nd} media, 3^{rd} media, ... by type. In this case, a field following the map image field 106 is a price field 107 storing a unit price of the 1s^{t} media, followed by a stock field 108 storing the number of stocks of the 1^{st} media. This is further followed by a price field 109 storing a unit price of the 2^{nd} media and a stock field 110 storing the number of stocks of the 2^{nd} media. In the example shown in Fig. 6, the fields following the stock field 110 are omitted. If a store does not deal in a certain type of media (e.g., tape cassette), the price field and stock field for that type of media are left blank.

Referring to Fig. 7, the following explanation is made on a model information table in the model information database stored in the program related information storage area of the HDD 35 in the management server 4. Fig. 7 is a schematic view showing the model information table for a certain product group belonging to a certain manufacturer.

As shown in Fig. 7, the model information table 120 includes records 121 each representing information on each model of a tape printer 3. Fig. 7 shows an example that the certain product group of the certain manufacturer includes six types of models. The models can share media with one another.

A top field in each record 121 is a model name field 122 storing the name of a model of the tape printer 3. Second and subsequent fields continuously arranged are tape cassette type fields 123 each storing the type of a tape cassette usable with the tape printer 3. These tape cassette type fields 123 are arranged to list all the types of tape cassettes usable with each tape printer 3. Accordingly, the number of tape cassette type fields 123 is different from record 121 to another. In the example shown in Fig. 7, the sixth and subsequent fields are omitted.

Here, the tape cassettes are referred again to as the 1^{st} media, 2^{nd} media, 3^{rd} media, ... by type. In this case, a leftmost record 121 represents that the 1^{st} media, 3^{rd} media, 5^{th} media, and 7^{th} media are usable with the tape printer 3 of the model corresponding to the record. A second record 121 from the left represents that the 1^{st} media, 2^{nd} media, 3r^{d} media, and 4^{th} media are usable with the tape printer 3 of the model corresponding to the record. A rightmost record 121 represents that the 3^{rd} media, 4^{th} media, 7^{th} media, and 8^{th} media are usable with the tape printer 3 of the model corresponding to the record.

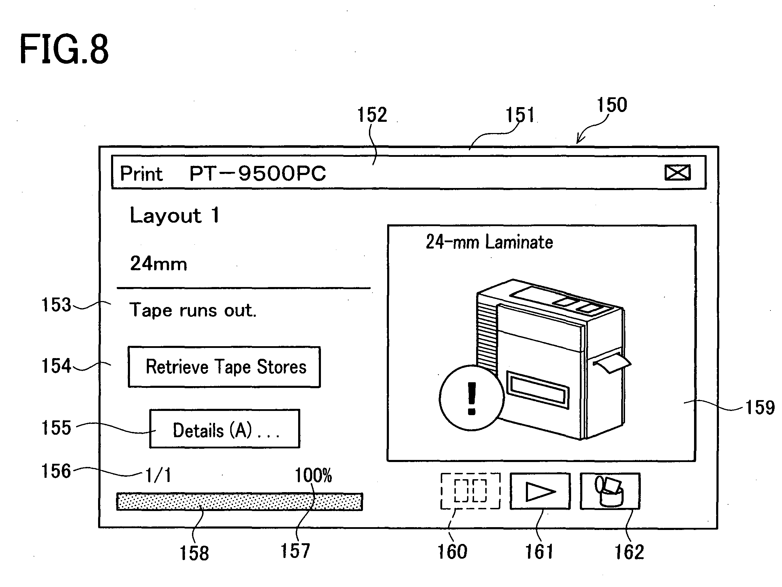

Referring to Fig. 8, furthermore, a print screen of a printer driver is explained below. Fig. 8 is an image view of the print screen of the printer driver. The printer driver program is installed in the client PC 2 to enable the use of a printer. The printer driver program has to be installed for each printer. During power-on of the client PC 2, all the printer driver programs installed in the client PC 2 always run and all the printer drivers are activated (stay resident). Each printer driver waits for a print request from one of various applications. In the present embodiment, however, the following explanation is made assuming that the client PC 2 used by this user is currently connected to the tape printer 3 alone as a printer and only the corresponding printer driver program has been installed.

When a print request is issued from any application, a printer driver 150 for this tape printer 3 causes the monitor 13 to display a print screen 151 shown in Fig. 8. This print screen 151 is designed to allow a print operation of the tape printer 3 to be controlled and to automatically close upon successful completion of printing by the tape printer 3. The print screen 151 shown in Fig. 8 displays an image that appears in the event of detection of a trouble that the tape of the tape cassette mounted in the tape printer 3 runs out.

As shown in Fig. 8, a title bar 152 is located along the top of the print screen 151, in which "Print PT-9500PC" is displayed. This "Print" represents a print screen and "PT-9500PC" represents the model name of the tape printer 3.

A word "Layout 1" is displayed left under the title bar 152. This represents the name of a file storing label data based on which a label is to be printed by the tape printer 3. Further, a word "24 mm" under it represents that the label data stored in the file named "Layout 1" is intended to be printed on a tape of a 24-mm width. Under the word "24 mm", a message display section 153 indicates a message "Tape runs out", a retrieval button 154 labeled "Retrieve Tape Stores" and a detail button 155 labeled "Details (A)...".

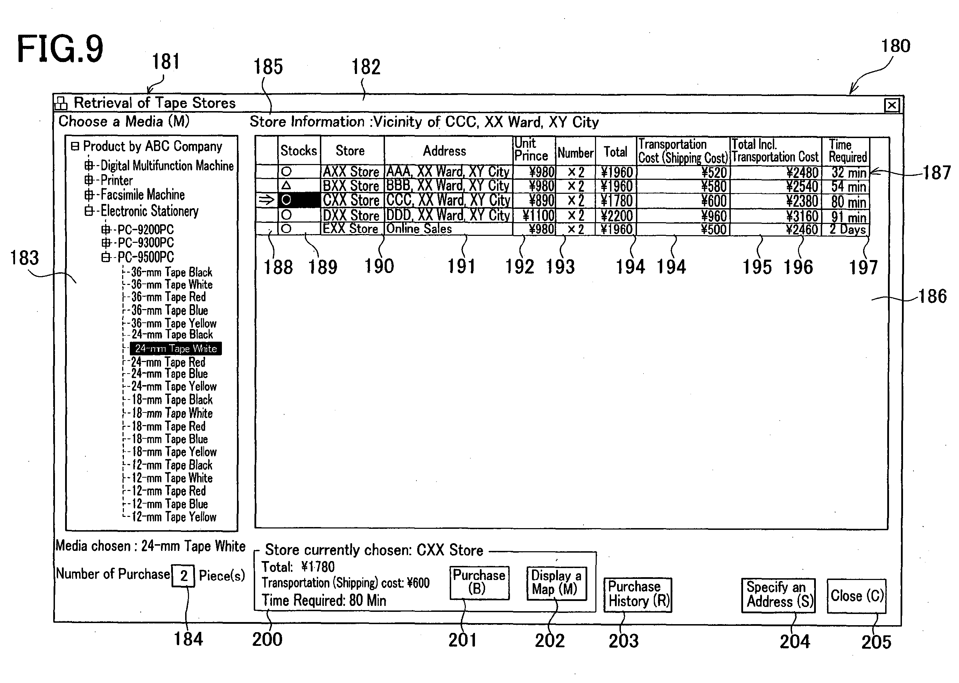

With the click of the mouse 15 on the retrieval button 154, the tape order program stored in the tape order program storage area of the HDD 35 is launched, thereby activating the store retrieval application (see Fig. 9). The activated store retrieval application firstdisplays a store retrieval screen (see Fig. 9) on the monitor 13.

With the click of the mouse 15 on the detail button 155, a detailed information screen not shown appears to show the details of a trouble and a solving method thereof.

A counter display section 156 indicating "1/1" is displayed at the lower left of the detail button 155. This counter display section 156 shows one of the contents of print request, namely, the "number of a current print sheet" of the "total number of print sheets". Specifically, "1" on the left of "/" represents the "number of a current print sheet" and "1" on the right of "/" represents the "total number of print sheets". The display in the counter display section 156 is effective in a copy print mode of creating a plurality of labels with the same contents and in a numbering print mode of creating labels while changing part of characters or the like to be printed every label in line with a predetermined rule; e.g., in many cases, a numeral is incremented every time one label is printed.

A progressing rate display section 157 indicating "100%" is displayed at the lower right of the detail button 155. This section 157 shows the progressing condition of print processing that starts in response to a print request. In the case where the print request represents printing on two labels, the progressing rate displayed in this section 157 becomes 50% at the completion of printing on a first label and then 100% at the completion of printing on a second label. In another case, where the print request represents printing on three labels, the progressing rate displayed in this section 157 becomes 33% at the completion of printing on a first label, 66% at the completion of printing on a second label, and 100% at the completion of printing on a third label. In the above manner, the progressing rate at the completion of printing on one label (sheet) is presented as a value obtained by dividing 100 by the total number of print labels. In case any trouble occurs during printing, the progressing rate is displayed assuming that the current printing on one label is completed even though it is not successful completion.

An indicator display section 158 is displayed under the counter display section 156 and the progressing rate display section 157. The indicator display section 158 is in a bar form which is changeable in length to present the progressing rate of print processing in association with the display on the progressing rate display section 157, so that a user can visually know the progressing rate of the print processing. The bar displayed in the indicator display section 158 will extend rightward from a left base end up to a right end which represents "100%".

A printer image display section 159 is displayed at the lower right of the title bar 152. In this section 159, the image of the tape printer 3 is displayed. This tape printer 3 is a model named PT-9500PC as displayed in the title bar. The word "24-mm Laminate" on this image represents the type of the tape cassette mounted in the tape printer 3. The mark "!" displayed overlapping a left lower portion of the image of the tape printer 3 represents that a trouble occurs.

Under the printer image display section 159, three buttons, namely, a suspend button 160, a print start button 161, and a print cancel button 162 arranged side by side in this order from left. The suspend button 160 is used to suspend print processing during printing. Fig. 8 shows a state that the print processing is suspended due to the trouble, in which the suspend button 160 is displayed by a dotted line representing a disabled (invalid) state. The print start button 161 is used to start the print processing. After the print processing is placed in a suspend state with the suspend button 160, the print processing can be restarted from the suspended state with the click of the print start button 161. The print cancel button 162 is used to stop the print processing in process thereof and close the print screen 151. The print cancel button 162 is displayed with an image of a trash box in which paper is thrown.

The aforementioned print screen 151, which is one of the print screens showing the occurrence of troubles, shows the case where the tape of the tape cassette mounted in the tape printer 3 runs out. According to the contents of troubles, different messages are displayed in the message display section 153. The retrieval button 154 may be hidden according to the contents of troubles.

The print screen 151 displayed while the tape printer 3 normally operates for printing is explained below. The print screen 151 in the normal printing status is almost the same as the print screen 151 shown in Fig. 8 representing the occurrence of trouble excepting for the following differences. One of the differences is the display in the message display section 153. In the print screen 151 displayed during the occurrence of any trouble as shown in Fig. 8, the message "Tape runs out" and the retrieval button 154 and the detail button 155 are arranged. On the other hand, in another print screen 151 displayed during normal printing state of the tape printer 3, only a message "In printing" appears in the message display section 153. In the printer image display section 159, the mark "!" does not appear during the normal printing state. During the normal printing state, further, the suspend button 160 is displayed in solid lines, representing its enabled (valid) status, the print start button 161 and print cancel button 162 are displayed in dotted lines, representing their disabled (invalid) status.

The printer driver 150 may be designed to always display the retrieval button 154 on the print screen 151 without relation to the presence/absence of the trouble.

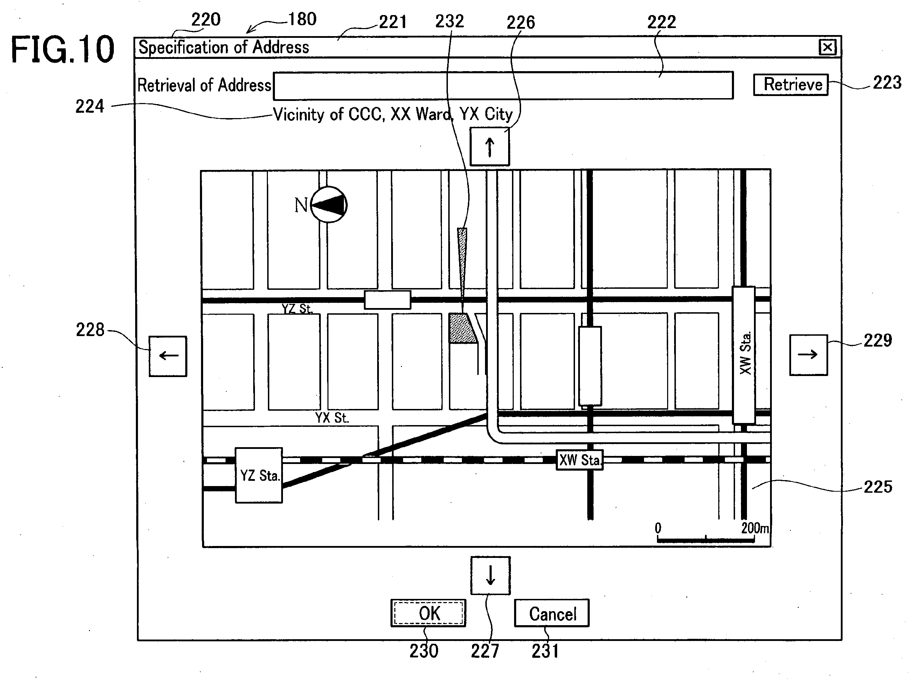

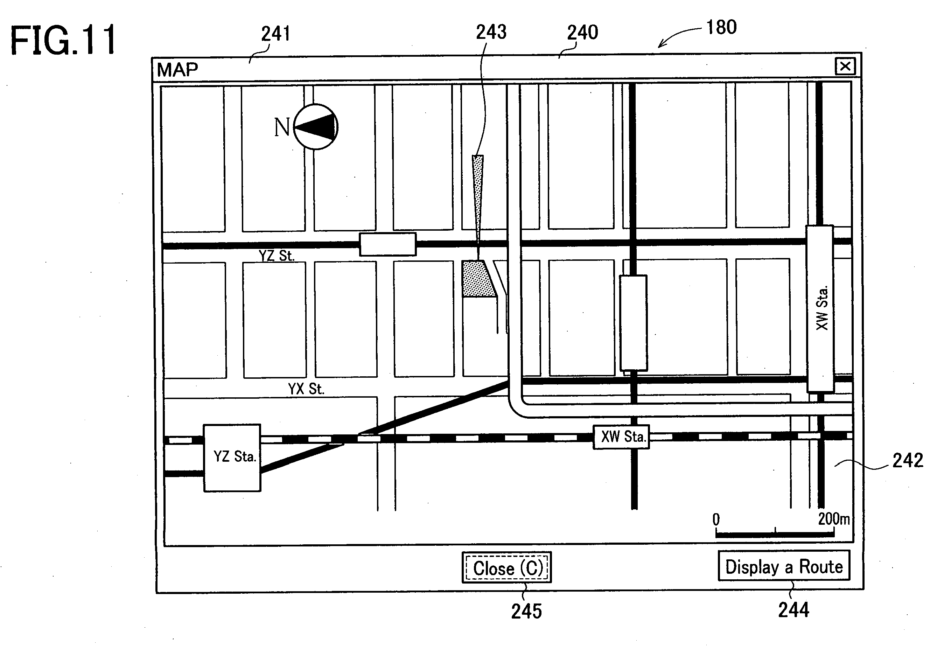

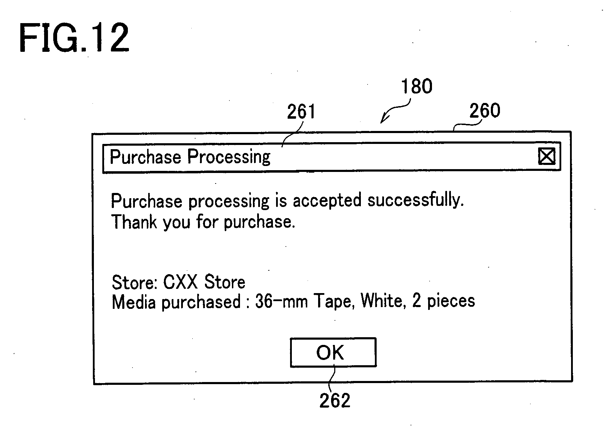

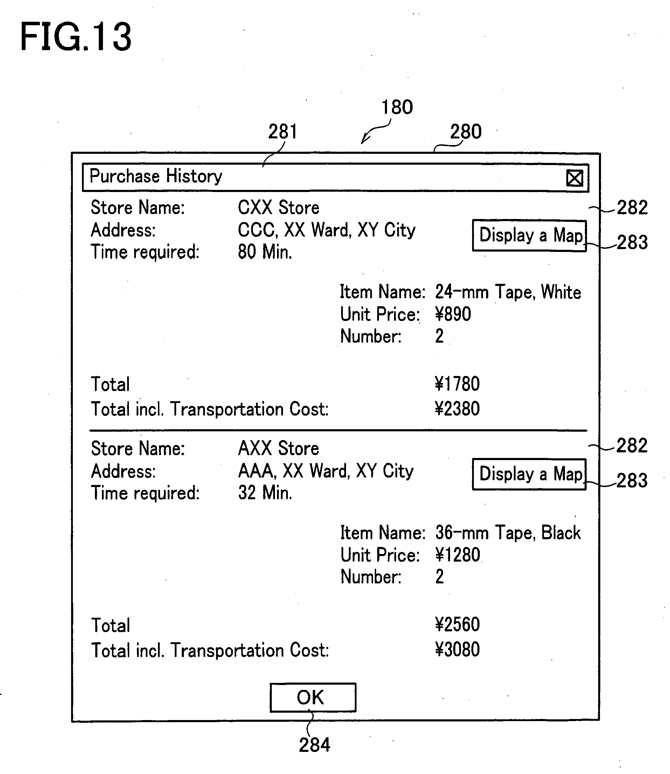

Each screen of the store retrieval application is described below referring to Figs. 9 to 13. Fig. 9 is an image view of a screen for store retrieval; Fig. 10 is an image view of a screen for address specification; Fig. 11 is an image view of a screen for store map; Fig. 12 is an image view of a screen for purchase processing; and Fig. 13 is an image view of a screen for purchase history.

Referring to Fig. 9, the store retrieval screen is explained first. With the click of the retrieval button 154 on the print screen 151 explained referring to Fig. 8, the tape order program stored in the tape order program storage area not shown of the HDD 35 is called up to activate the store retrieval application 180, which initially displays the store retrieval screen 181 of a store retrieval application 180 as shown in Fig. 9. The store retrieval screen 181 includes a title bar 182 located along the top, labeled "Retrieval of Tape Stores". A subject "Choose a Media (M)" is displayed at the lower left of the title bar 182. A media choice section 183 is displayed under the subject to allow the user to choose desired media. This media choice section 183 displays items in a tree structure.

In the media choice section 183, a heading "Product by ABC Company" is located in the uppermost row, followed by indented items "Digital Multifunction Machine", "Printer", "Facsimile Machine", and "Electronic Stationery" in different rows. Under "Electronic Stationery", slightly indented items "PT-9200PC", "PT-9300PC", and "PT-9500PC" are arranged in different rows. Further, under "PT-9500PC", slightly indented items are arranged in different rows; "36-mm Tape Black", "36-mm Tape White", "36-mm Tape Red", "36-mm Tape Blue", "36-mm Tape Yellow", "24-mm Tape Black", "24-mm Tape White", "24-mm Tape Red", "24-mm Tape Blue", "24-mm Tape Yellow", "18-mm Tape Black", "18-mm Tape White", "18-mm Tape Red", "18-mm Tape Blue", "18-mm Tape Yellow", "12-mm Tape Black", "12-mm Tape White", "12-mm Tape Red", "12-mm Tape Blue", and "12-mm Tape Yellow".

In front of the heading "Product by ABC Company", there is a short dotted horizontal line connected with a symbol "-" enclosed in a box on the left end. In front of each of the items "Digital Multifunction Machine", "Printer", "Facsimile Machine", and "Electronic Stationery", similarly, there is a short dotted line connected with a symbol enclosed in a box on the left end. Specifically, the symbols for "Digital Multifunction Machine", "Printer", and "Facsimile Machine" are "+" and the symbol for the "Electronic Stationery" is "-". Those boxes are connected to one another with short dotted vertical lines and the box for the "Digital Multifunction Machine" is also connected to the "Product by ABC Company". The connecting relation of the vertical and horizontal dotted lines shows that "Product by ABC Company" includes "Digital Multifunction Machine", "Printer", "Facsimile Machine", and "Electronic Stationery".

In front of each of the items "PT-9200PC", "PT-9300PC", and "PT-9500PC", similarly, there is a short dotted line connected to a symbol enclosed in a box on the left end. The symbols for "PT-9200PC" and "PT-9300PC" are "+" and the symbol for "PT-9500PC" is "-". Further, those boxes are connected to one another with vertical short dotted lines and the box for "PT-9200PC" is also connected to "Electronic Stationery". The connecting relation of the vertical and horizontal dotted lines shows that "Electronic Stationery" includes "PT-9200PC", "PT-9300PC", and "PT-9500PC".

In front of each of the items "36-mm Tape Black", "36-mm Tape White", "36-mm Tape Red", "36-mm Tape Blue", "36-mm Tape Yellow", "24-mm Tape Black", "24-mm Tape White", "24-mm Tape Red", "24-mm Tape Blue", "24-mm Tape Yellow", "18-mm Tape Black", "18-mm Tape White", "18-mm Tape Red", "18-mm Tape Blue", "18-mm Tape Yellow", "12-mm Tape Black", "12-mm Tape White", "12-mm Tape Red", "12-mm Tape Blue", and "12-mm Tape Yellow", there is also a horizontal short dotted line connected to another row at respective left ends and also to the item "PT-9500PC".

The connecting relation of the vertical and horizontal dotted lines shows that usable media with "PT-9500PC" are "36-mm Tape Black", "36-mm Tape White", "36-mm Tape Red", "36-mm Tape Blue", "36-mm Tape Yellow", "24-mm Tape Black", "24-mm Tape White", "24-mm Tape Red", "24-mm Tape Blue", "24-mm Tape Yellow", "18-mm Tape Black", "18-mm Tape White", "18-mm Tape Red", "18-mm Tape Blue", "18-mm Tape Yellow", "12-mm Tape Black", "12-mm Tape White", "12-mm Tape Red", "12-mm Tape Blue", and "12-mm Tape Yellow".

The existence of the box in front of each item represents that each supply is followed by any subordinate supplies. The symbol "-" enclosed in a box represents that one of the subordinate supplies is displayed on a screen, while the symbol "+" represents that any subordinate(s) is not displayed on the screen. With the click of each box, the symbol in that box changes alternately.

In Fig. 9, only the item "24-mm Tape White" is displayed in reverse video (white text on black) in the media choice section 183. This shows that a cassette "24·mm Tape, White" is chosen as the media. This choice is made with the click on each item. It is to be noted that the store retrieval screen 181 displayed immediately after the click of the retrieval button 154 on the print screen 151 as shown in Fig. 8 shows that the type of the tape cassette currently mounted in the tape printer 3 controlled by the concerned printer driver 150 is selected.

The selectable media arranged in the media choice section 183 are different from product to another and not limited to tape cassettes. The media for digital multifunction device, printer, and facsimile machine may include standard paper such as A4-sized paper and A3-sized paper. Other selectable supplies in the media choice section depend on products; for example, they may include a thermal transfer ink ribbon cassette, an ink cartridge for ink jet printer, a toner cartridge for laser printer, battery, and other common supplies as well as print media. The above interpretation also applies to the term "media" throughout the present embodiment.

Under the media choice section 183, there is a display "Media chosen: 24-mm Tape White", which represents the chosen media in the media choice section 183.

Further, a purchase number entry box 184 is provided under the display "Media chosen: 24-mm Tape white". In this entry box 184, a user can enter the number of chosen media to be purchased. In this example, "2" is entered in the purchase number entry box 184. Words "Number of Purchase" are provided on the left of the entry box 184 and a word "Piece(s)" is provided on the right of the same. The combination of those words and the numeric entered in the purchase number entry box 184 reads "the number of purchase: 2 pieces". On the store retrieval screen 181 just displayed, "0" appears in the purchase number entry box 184.

Under the title bar 182 and on the right of the "Choose a Media (M)", there is a retrieval range display section 185 showing the display "Store Information: Vicinity of AAA, XX Ward, XY City". Of the display, the "AAA, XX Ward, XY City" represent an address specified by the user on an address specification screen (see Fig. 10) which will be mentioned later. In many cases, it is a user's residence address or business address.

Under the retrieval range display section 185, there is a store information display area 186 in which a store information list 187 is displayed on the upper part. The store information list 187 includes a column labeled a field name of each field mentioned later and, beneath it, records of stores. In Fig. 9, five records (stores) are listed. This list is a result of narrowing down the stores under the condition of the vicinity of "AAA, XX Ward, XY City" in the retrieval range display section 185.

Each record includes a choice field 188, a stock field 189, a store name field 190, an address field 191, a price field 192, a purchase number field 193, a total amount field 194, a transportation cost (shipping cost) field 195, a total amount including transportation cost field 196, and a time required field 197.

The choice field 188 is used to choose a record. A rightward arrow appears on the choice field 188 of the chosen record, while other choice fields 188 of the unchosen records remain blank. The record is chosen with the click of the mouse 15 on the corresponding choice field 188.

The stock field 189 indicates stock availability of the media chosen in the media choice section 183 in each store. A mark "○" in the stock field 189 represents that a store has a sufficient stock and a mark "Δ" represents that a store has a small stock. If a store has no stock, the store is not listed as a record in the store information list 187. Alternatively, the store having no stock may be listed with a mark "×" to present that the store accepts back-ordering.

The store name field 190 shows the name of each store that sells the media a user intends to buy.

The address field 191 indicates the address of each store adopting the store sales. For a store adopting the online sales, "Online" is displayed.

The price field 192 shows the price of the media chosen in the media choice section 183 in each store.

The purchase number field 193 indicates a numeric value corresponding to the number of media entered in the purchase number entry box 184 and a multiplication sign "×". In association with the entry of the number of media in the purchase number entry box 184, the indication in the purchase number field 193 is updated.

The total amount field 194 indicates the amount of money calculated by multiplying a price in the price field 192 by the numeric value indicated in the purchase number field 193. In association with the entry of the number of media in the purchase number entry box 184, the indication in the total amount field 194 is updated.

The transportation cost (shipping cost) field 195 indicates a transportation cost to go to a store in the case of the store adopting the store sales or a shipping cost required for shipping (delivering) the media from a store in the case of the store adopting the online sales.

The total amount including transportation cost field 196 indicates the total amount of the amount in the total amount field 194 and the amount in the transportation cost (shipping cost) field 195. In association with the entry of the number of media in the purchase number entry box 184, the total amount in this field 196 is also updated.

The time required field 197 shows the time (unit: minutes) required to go to a store in the case of the store adopting the store sales or the days required to ship (deliver) a purchased supply to a user from a store in the case of the store adopting the online sales.

In the store information list 187 of the store retrieval screen 181 shown in Fig. 9, the following records are displayed. A first record contains the choice field 188: blank; the stock field 189: "○", the store field 190: "AXX Store"; the address field 191: "AAA, XX Ward, XY City"; the price field 192: "¥980"; the purchase number field 193: "x2"; the total amount field 194: "¥1960"; the transportation cost (shipping cost) field 195: "¥520"; the total amount incl. transportation cost field 196: "¥2480"; and the time required field 197: "32 min."

A second record contains the choice field 188: blank; the stock field 189: "Δ", the store field 190: "BXX Store"; the address field 191: "BBB, XX Ward, XY City"; the price field 192: "¥980"; the purchase number field 193: "×2"; the total amount field 194: "¥1960"; the transportation cost (shipping cost) field 195: "¥580"; the total amount incl. transportation cost field 196: "¥2540"; and the time required field 197: "54 min."

A third record contains the choice field 188: a right arrow; the stock field 189: "○", the store field 190: "CXX Store"; the address field 191: "CCC, XX Ward, XY City"; the price field 192: "¥890"; the purchase number field 193: "×2"; the total amount field 194: "¥1780"; the transportation cost (shipping cost) field 195: "¥600"; the total amount incl. transportation cost field 196: "¥2380"; and the time required field 197: "80 min." The stock field 189 is shown in reverse video.

A fourth record contains the choice field 188: blank; the stock field 189: "○", the store field 190: DXX Store"; the address field 191: "DDD, XX Ward, XY City"; the price field 192: "¥1100"; the purchase number field 193: "×2"; the total amount field 194: "¥2200"; the transportation cost (shipping cost) field 195: "¥960"; the total amount incl. transportation cost field 196: "¥3160"; and the time required field 197: "91 min."

A fifth record contains the choice field 188: blank; the stock field 189: "○", the store field 190: "EXX Store"; the address field 191: "Online Sales"; the price field 192: "¥980"; the purchase number field 193: "×2"; the total amount field 194: "¥1960"; the transportation cost (shipping cost) field 195: "¥500"; the total amount incl. transportation cost field 196: "¥2460"; and the time required field 197: "2 days."

The above records are arranged from top down in ascending order of the value in the time required field 197.

A purchase section 200 is provided at the lower left of the store information display area 186. At the top of the purchase section 200, a heading "Store currently chosen: CXX Store" is displayed. This "CXX Store" corresponds to the record chosen in the store information list 187 and updated as another record is chosen. Under "Store currently chosen: CXX Store", corresponding data "Total: ¥1780", "Transportation cost: ¥600", and "Time required: 80 min." are displayed from top down in this order. The data also match the record chosen in the store information list 187 and updated as another record is chosen. In Fig. 9, the store retrieval screen 181 shows a case that the third record in the store information list 187 is chosen. Accordingly, the purchase section 200 indicates numeric values of the third record.

Within the purchase section 200, there are a purchase button 201 labeled "Purchase (B)" at the center and a map button 202 labeled "Display a Map (M)" on the right of the button 201. The purchase button 201 is used for ordering supplies. When a user clicks the purchase button 201 to place an order for a chosen supply, the client PC 2 creates purchase information specifying the order for media such as the name of a chosen store and the type and number of media to be purchased and sends that created information to the management server 4. The management server 4 that receives the purchase information returns information on whether or not the order has properly been accepted. Upon receipt of the returned information, the client PC 2 displays the purchase processing screen as shown in Fig. 12 mentioned later. The display contents of the purchase processing screen (see Fig. 12) will be changed according to the information from the management server 4 as to whether or not the order has properly been accepted.

The map button 202 is used to know the location of the chosen store on the map. When the user clicks the map button 202 to know the location of the chosen store on the map, the client PC 2 transmits a store map request including the name of a manufacturer, the name of a product group, and the name of the chosen store to the management server 4. The management server 4 that receives the store map request returns a map image including the location of the store to the client PC 2. Thus, the store map screen appears as shown in Fig. 11 mentioned later.

A history button 203 labeled "Purchase history (R)" is displayed on the right of the purchase section 200. This history button 203 is used to view a purchase (shopping) history shown in a list form including the supplies purchased online by using the store retrieval screen 181. When the user clicks the history button 203 to view the purchase history, a purchase history screen as shown in Fig. 13 mentioned later appears.

An address specification button 204 labeled "Specify an Address (S)" is provided on the right of the history button 203. This address specification button 204 is used to allow a user to specify any address. The address may be specified arbitrarily; however, in many cases a user's residence or business address in which the tape printer 3 is placed is specified. When the user clicks the address specification button 204 to specify any address, the address specification screen as shown in Fig. 10 mentioned later appears.

A close button 205 labeled "Close (C)" is provided on the right of the address specification button 204. This close button 205 is used to close the store retrieval screen 181, thereby exiting the store retrieval application 180.

Referring to Fig. 10, the address specification screen is explained below. The address specification screen 220 of the store retrieval application 180 shown in Fig. 10 appears with the click of the address specification button 204 on the store retrieval screen 181 explained above referring to Fig. 9.

The address specification screen 220 includes a title bar 221 located along the top, labeled "Specification of Address". A subject "Retrieval of Address" is displayed at the lower left of the title bar 221. On the right of this subject, an address entry box 222 and a retrieval button 223 labeled "Retrieve" are arranged side by side. Further, under the address entry box 222, there is a display range indication section 224 showing "Vicinity of CCC, XX Ward, XY City". Under the display range indication section 224, a map display section 225 is provided to display an image of a map. On the top, bottom, left and right of the map display section 225, an upper button 226, a lower button 227, a left button 228, and a right button 229 are displayed respectively, which are collectively referred to as a "map move button". An "OK" button 230 is displayed at the lower left of the lower button 227 and a "Cancel" button 231 is displayed at the lower right of the lower button 227.

In the address entry box 222, any address may be entered by the user with the keyboard 14 or the like. The retrieval button 223 is used to display the map in the map display section 225 so that the map is centered on the address entered in the address entry box 222. When the user clicks the retrieval button 223, the client PC 2 transmits a first-address map request including the address entered in the address entry box 222 to the management server 4. The management server 4 that receives the first-address map request sends back the image of a map centered on a point specified by the entered address and the address information corresponding to the entered address to the client PC 2. Then, the client PC 2 displays the received map image in the map display section 225 and the returned address and the term "Vicinity of" in the display range indication section 224. When the map image is displayed in the map display section 225, a downward-wedge-shaped mark 232 is together displayed in such a manner that the apex of the mark 232 points out the location of the chosen address. This mark 232 and a zone defined by the address and pointed out by the apex of the mark 232 are displayed in the same color. They are incorporated in the form of image in the map image sent from the management server 4.

The address entered in the address entry box is stored as a registered address in the program related information in the HDD 35 with the click of the OK button 230. When the address specification button 204 on the store retrieval screen 181 is clicked to display the address specification screen 220, the client PC 2 also transmits the first-address map request including the address (registered address) stored in the HDD 35 to the management server 4. In response to the request, the management server 4 sends back the map image centered on the location indicated by the address to the client PC 2. Therefore, even just after the address specification screen 220 appears with the address entry box 222 remaining blank, the map image is displayed in the map display section 225 as shown in Fig. 10.

The mark 232 is movable within the map display section 225 by dragging the mouse 15. During dragging, the mark 232 appears as a blinking outline. The position of the mark 232 is associated with the address in the address entry box 222. Specifically, when the mark 232 is dragged by the mouse 15, the client PC 2 transmits a second-address map request including the moving direction and amount (distance) of the mark 232 to the management server 4. Upon receipt of the request, the management server 4 sends back information including the image of the map indicated by the moved mark 232 and the address pointed out by the moved mark 232 to the client PC 2. The client PC 2 then displays the received map image in the map display section 225 and the received address in the address entry box 222.

When the map move button (upper button 226, lower button 227, left button 228, right button 229) is clicked, the client PC 2 transmits a third-address map request including a moving direction and amount (distance) of a region to be displayed to the management server 4. Upon receipt of the request, the management server 4 sends back the image of the moved map to the client PC 2, which then displays the received map image in the map display section 225. In this case, the mark 232 is moved in sync with movement of the displayed region relative to the map display section 225. That is, the address pointed out by the mark 232 remains unchanged.

Every time the address specification screen 220 appears, the mark 232 initially points out the center of the map display section 225. The example in Fig. 10 shows a state that the address specification screen 220 appears and then the left button 228 and the upper button 226 are clicked one time respectively.

At the lower right of the map display section 225, a distance scale of "200 m" as a reference to indicate the distance on the map.

The OK button 230 is used to set the address pointed out by the mark 232 as the user's address. When the OK button 230 is clicked, the address pointed out by the mark 232 is stored as the registered address in the HDD 35. If there is a registered address already stored in the HDD 35, it is updated to the address currently pointed out by the mark 232. The address specification screen 220 is closed in sync with the click of the OK button 230, followed by a nearest station specification screen not shown.

The "Cancel" button 231 is used to close the address specification screen 220. When the "Cancel" button 231 is clicked, the address specification screen 220 is closed without saving any setting.

Next, the nearest station specification screen not shown is explained below. This nearest station specification screen is used for setting a nearest station of public transport to the address set in the address specification screen 220. For a bus, the names of a bus company, a bus line, and a bus stop are set. For a railroad, the names of a railroad company, a railroad line, and a railroad station are set. The nearest station specification screen therefore contains a prefecture choice section, a bus/railroad choice section, a bus company choice section, a bus line choice section, a bus stop choice section, a railroad company choice section, a railroad line choice section, and a railroad station choice section, which are not shown.

The prefecture choice section is used for choosing a prefecture; the bus/railroad choice section is used for choosing a bus or a railroad; the bus company choice section is used for choosing one of bus companies in the prefecture selected in the prefecture choice section; the bus line choice section is used for choosing one of bus lines belonging to the bus company selected in the bus choice section; the bus stop choice section is used for choosing one of bus stops of the bus line selected in the bus line choice section.

The railroad company choice section is used for choosing one of railroad companies in the prefecture selected in the prefecture choice section; the railroad line choice section is used for choosing one of railroad lines belonging to the railroad company selected in the railroad company choice section; and the railroad station choice section is used for choosing one of railroad stations of the railroad line selected in the railroad line choice section.

All of the above prefecture choice section, the bus/railroad choice section, the bus company choice section, the bus line choice section, the bus stop choice section, the railroad company choice section, the railroad line choice section, and the railroad station choice section, which are not shown, are displayed in a combo box. When a button of the combo box is clicked by a user, selectable supplies written in horizontal direction are displayed in vertical list form. With the click of a desired supply in the list, the clicked supply is chosen.

The nearest station specification screen not shown further includes an OK button and a cancel button. With the click of the OK button, a value selected in each of the prefecture choice section, the bus/railroad choice section, the bus company choice section, the bus line choice section, the bus stop choice section, the railroad company choice section, the railroad line choice section, and the railroad station choice section is stored as registered station information in the HDD 35. If there is registered station information already stored in the HDD 35, it is updated to current selected information. With the click of the OK button, the nearest station specification screen is closed.

The cancel button not shown is used to close the nearest station specification screen. When this cancel button is clicked, the nearest station specification screen is closed without saving any setting.

Referring to Fig. 11, an address specification screen is explained below. A store map screen 240 of the store retrieval application 180 as shown in fig. 11 appears with the click of the map button 202 on the store retrieval screen 181 explained above referring to Fig. 9.

The store map screen 240 includes a title bar 241 at the top labeled with "Map". Under this title bar 241, a map display section 242 is arranged.

The map display section 242 displays a vicinity map of the store selected on the store information display area 186 of the store retrieval screen 181. When the map image appears in the map display section 242, a downward-wedge-shaped mark 243 together appears with its apex pointing out the location of the chosen store. This mark 243 and a zone indicating the store are displayed in the same color. They are incorporated in the form of image in the map image sent from the management server 4. The map image also includes a nearest station of public transport for convenience to a user. Accordingly, the mark 243 does not always point out the center of the map display section 242.

At the lower right of the map display section 242, a distance scale of "200 m" as a reference to indicate the distance on the map.

It is to be noted that the map image shown in the map display section 242 of the store map screen 240 and the map image displayed in the map display section 225 of the address specification screen 220 in Fig. 10 are identical but not related to each other. Those map images are merely examples of respective screens.

A route button 244 labeled "Display a Route" is displayed at the lower right of the store map screen 240. When the route button 244 is clicked, a route display screen not shown appears.

Under the map display section 242, a close button 245 labeled "Close (C)" is displayed. With the click of this button 245, the store map screen 240 is closed.

A route display screen not shown is explained below. When the route button 244 is clicked on the store map screen 240 as shown in Fig 11, the client PC 2 transmits a route request including the name of a store and information on a registered station to the management server 4. Upon receipt of this request, the management server 4 sends back information on the route from the nearest station set in the nearest station specification screen to a station nearest the store to the client PC 2. The client PC 2 then displays the route display screen not shown to show the route from the station nearest the address set by the user to the station nearest the store. The route display screen also includes a close button not shown, which is clicked to close the route display screen.

Referring to Fig. 12, a purchase processing screen is explained below. Fig. 12 is an image view showing an example of a purchase processing screen. As mentioned above, when the purchase button 201 is clicked on the store retrieval screen 181 (see Fig. 9), the client PC 2 transmits the user ID and PASSWORD, the purchase information for ordering a desired media, containing the chosen store name, the type and number of media, to the management server 4. Upon receipt of the above information, the management server 4 sends back the information as to whether or not the ID and PASSWORD are valid or whether or not the order is accepted successfully. A purchase processing screen 260 is used for displaying the information mentioned above.

As shown in Fig. 12, the purchase processing screen 260 includes a title bar 261 along the top labeled "Purchase Processing". The purchase processing screen 260 shown in Fig. 12 will appear when the order is accepted successfully. Under the title bar 261, there is a message "Purchase processing is accepted successfully. Thank you for purchase." Under this message, there are further displays "Store: CXX Store" and "Media purchased: 36-mm Tape White 2-Pieces". These displays allow the user to confirm the store at which the user bought the media, and the name and number of purchased media.

If the order is not terminated successfully, instead of the above message "Purchase processing is accepted successfully. Thank you for purchase.", another message "Sorry. Purchase processing is unaccepted." will appear under the title bar 261.

An OK button 262 is arranged under the above display "Media purchased: 36-mm Tape White 2-Pieces". When this button 262 is clicked, the purchase processing screen 260 is closed.

Referring to Fig. 13, a purchase history screen is explained below. Fig. 13 is an image view showing an example of the purchase history screen. As mentioned above, when the history button 203 on the store retrieval screen 181 (see Fig. 9) is clicked, a purchase history screen 280 of the store retrieval application 180 initially appears. As shown in Fig. 13, the purchase history screen 280 includes a title bar 281 located along the top, labeled "Purchase History". Under the title bar 281, there are history display sections 282 each showing the history of purchase processing which has previously been made with the click of the purchase button 201 on the store retrieval screen 181 (see Fig. 9). The history display sections 282 are prepared one for one purchase processing and in number of times the purchase processing has been executed and arranged vertically in the purchase history screen 280. In the example of Fig. 13, the purchase history screen 280 shows two history display sections 282. In the example, the upper history display section 282 includes the following items: "Store name: CXX Store" at the top, "Address: CCC, XX Ward, XY City" under the store name, and a map button 283 labeled "Display a Map" on the right of the address. Further, under the item "Address: CCC, XX Ward, XY City", the following items are vertically arranged; "Time required: 80 min.", "Item name: 24-mm Tape White", "Unit Price: ¥890", "Number: 2", "Total: ¥1780", and "Total incl. transportation cost: ¥2380".

The lower history display section 282 includes the following items "Store name: AXX Store" at the top, "Address: AAA, XX Ward, XY City" under the store name, and a map button 283 labeled "Display a Map" on the right of the address. Further, under the "Address: AAA, XX Ward, XY City", the following items are vertically arranged; "Time required: 32 min.", "Item name: 36-mm Tape Black", "Unit Price: ¥1280", "Number: 2", "Total: ¥2560", and "Total incl. transportation cost: ¥3080".

When the map button 283 is clicked, the same screen appears as the store map screen 240 that will appear with the click of the map button 202 on the aforementioned store retrieval screen 181 (see Fig. 9). On the store map screen 240, a vicinity map of a concerned store is displayed. Since this map is the same as the map displayed with the click of the map button 202, its explanation is not repeated herein.

An OK button 284 is arranged at the bottom of the purchase history screen 280. With the click of this button 284, the purchase history screen 280 is closed.

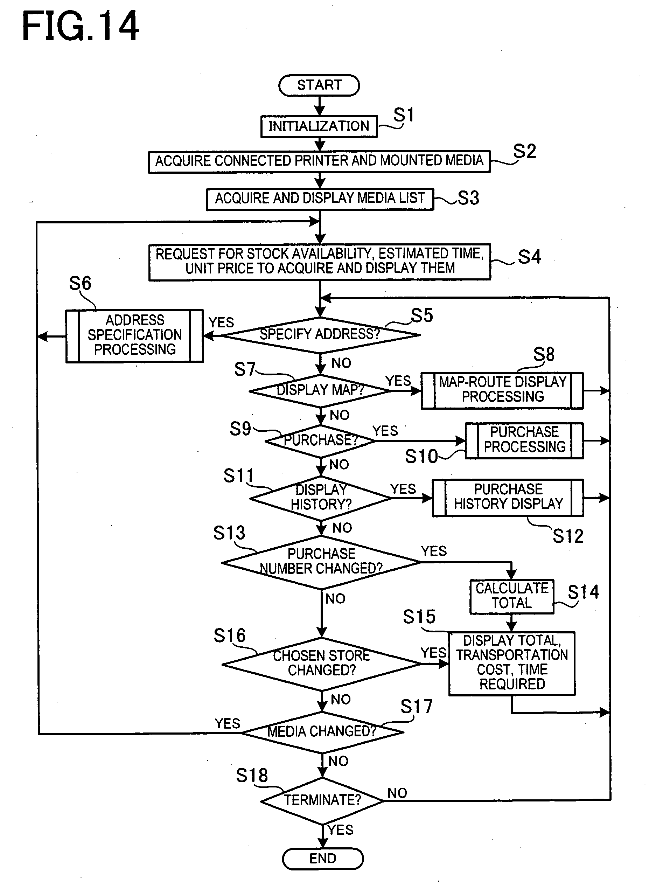

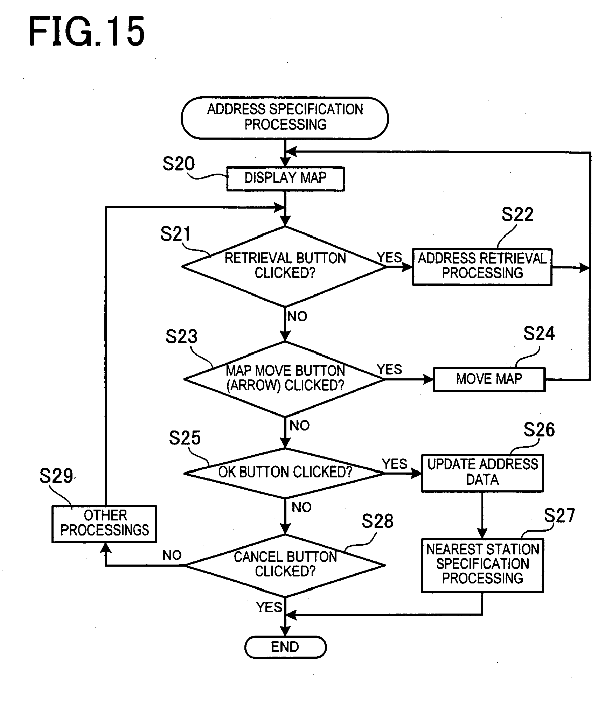

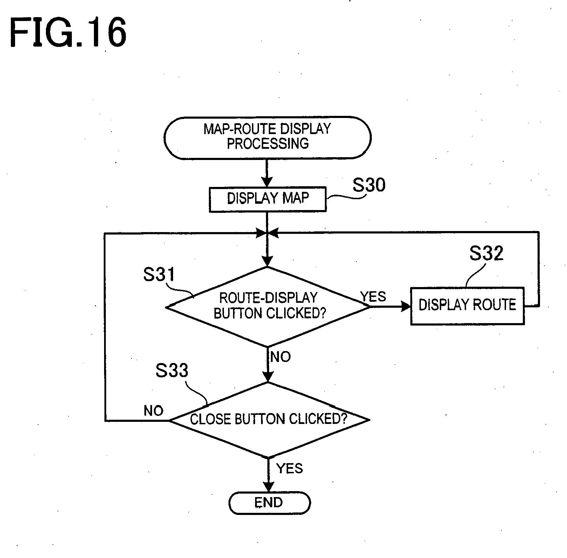

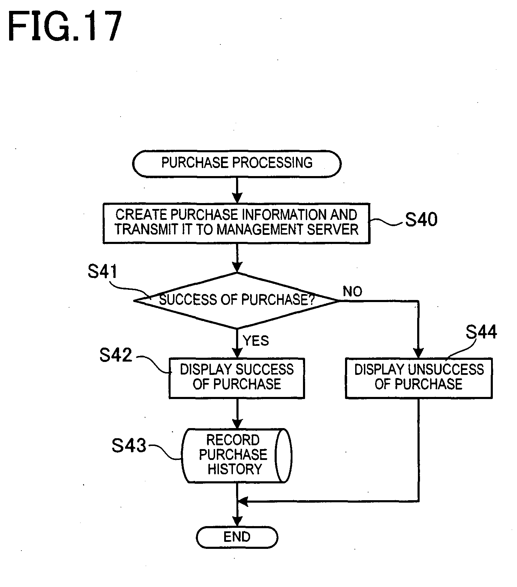

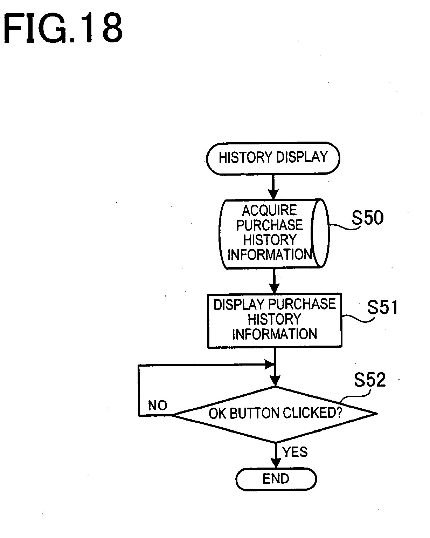

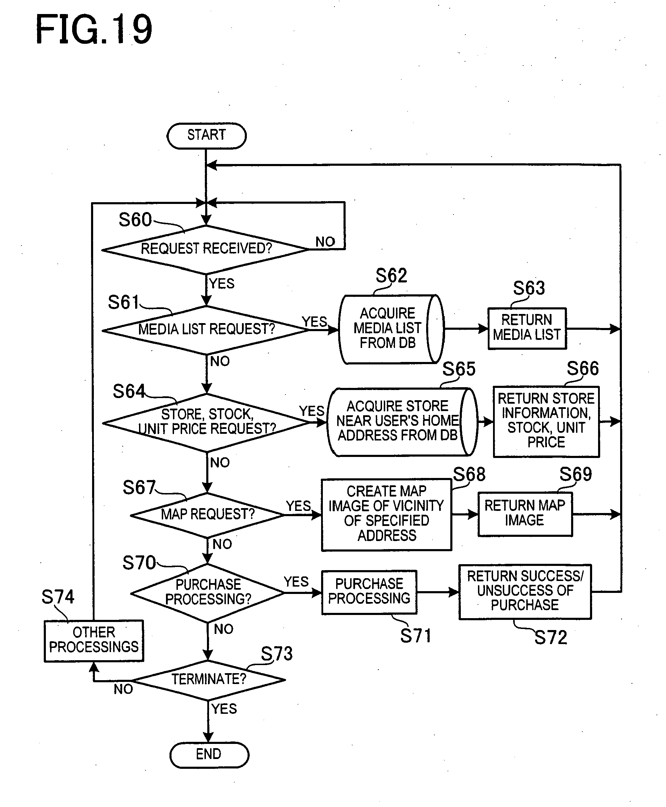

The processing in each device constituting the order system 1 in the present embodiment will be described below referring to Figs. 14 to 19. Figs. 14 to 19 show flowcharts of processings to be executed in the client PC 2; specifically, Fig. 14 is a flowchart of a main processing; Fig. 15 is a flowchart of an address specification processing; Fig. 16 is a flowchart of a map-route display processing; Fig. 17 is a flowchart of a purchase processing; Fig. 18 is a flowchart of a history display processing. Fig. 19 is a flowchart of a main processing to be executed in the management server 4.

The processings to be executed in the client PC 2 are explained first, referring to Figs. 14 to 18. All of the processings are executed in the CPU not shown of the control circuit 36.

When the power of the client PC 2 is turned on, the program of the OS stored in the OS storage area in the HDD 35 is executed in the CPU of the control circuit 36, thereby activating the OS. Following activation of the OS, the printer driver program stored in the printer driver storage area not shown in the HDD 35 runs on the OS, that is, the printer driver program is executed in the CPU while the OS stored in the OS storage area is executed in the CPU, and various parameters stored in the RAM in the memory 34 are initialized. The printer driver 150 for the tape printer 3 is thus activated and then waits ready until the print request is issued from one of various applications for printing to the tape printer 3. This state is referred to as "the printer driver 150 stays resident in the client PC 2". It is then determined whether or not the print request is issued from the various printing application to the tape printer 3. If it is determined that the request is issued, the print screen 151 as explained referring to Fig. 8 appears on the monitor 13. If no print request is issued, a determination on the presence/absence of the print request is repeatedly conducted.

If the print request is issued, print data is then transmitted to the tape printer 3 via the communication I/F part 32. It is successively determined whether or not a print status transmitted from the tape printer 3 is received by the client PC 2. If it is judged that no print status is received, a determination is made again as to whether or not the print status is received, and any action such as click operations of various buttons is awaited.

If it is determined that the print status is received, it is then judged whether or not the print status is successful printing completion. If the print status is successful printing completion, the print screen 151 is closed and the print request is awaited until it is issued again from any one of various applications for printing. If the print status is not successful printing completion, a processing appropriate for the print status transmitted from the tape printer 3 is carried out.

If it is determined that any operation is made, a processing appropriate for the operation is carried out. Of the processings, the processing to be executed in response to the click of the retrieval button 154 is the main processing shown in Fig. 14.

After the processing appropriate for the operation, receipt of the print status and various operations by the user are awaited.

Referring to Fig. 14, the main processing in the client PC 2 is explained below.

When it is determined that the retrieval button 154 is clicked on the print screen 151 as shown in Fig. 8, the tape order program stored in the tape order program storage area of the HDD 35 is called up and the CPU of the control circuit 36 starts execution of the tape order program. The processing of the tape order program is explained with reference to the flowchart of Fig. 8.

As shown in Fig. 8, in S1, various parameters stored in the RAM of the memory 34 are initialized and a flow advances to S2.

In S2, information on the type of the media mounted in the printer connected to the client PC 2 is obtained. Herein, the connected printer is identified based on which printer is associated with the print screen 151 containing the retrieval button 154 whereby the current tape order program was called up. This identification is made by referring to a predetermined parameter stored in a memory not shown. In the present embodiment, the tape printer 3 is concerned. The information on the type of the media mounted in the printer 3 is acquired by transmitting a command to request the tape printer 3 via the USB port 33 to transmit the type of the tape cassette mounted in the tape printer 3 and receiving the information sent back from the tape printer 3. The flow advances to S3.

In S3, a media list request including the name of a manufacturer is transmitted to the management server 4 via the communication I/F part 32. From the management server 4 that receives the request, the model information table related to all products manufactured by the specified manufacturer is sent back in the form of a single media list data (see S62 and S63 in Fig. 19). The client PC 2 receives that media list data via the communication I/F part 32.

Then, the store retrieval screen 181 as shown in Fig. 9 appears on the monitor 13. At this time, no numeric is entered in the purchase number entry box 184. The retrieval range display section 185 indicates the address previously set. No store name is displayed on the right of the "Store currently chosen:" in the purchase section 200. On the right of each of other items in the purchase section 200; "Total:", "Transportation cost (Shipping cost):", and "Time required:", similarly, no corresponding word or numeric are displayed. The media list data transmitted from the management server 4 is used to display the media choice section of the store retrieval screen 181. Thereafter, the flow advances to S4.

In S4, using the store retrieval screen 181, the store information request including the name of the media chosen in the media choice section 183, the name of the product group using the media, the name of the manufacturer of the media, and the user's registered address and registered station is transmitted to the management server 4 via the communication I/F part 32.

The management server 4 retrieves appropriate stores in the vicinity of the registered address from the store information table (see Fig. 6) related to the specified product group of the specified manufacturer, and obtains and creates the table data (including each data on stock information, store name, store address, media unit price, transportation cost (shipping cost), time required) to display the store information list 187 in the store information display area 186 (see S65 in Fig. 19). The management server 4 sends the created table data to the client PC 2 (see S66 in Fig. 19). The client PC 2 receives the table data via the communication I/F part 32 to display the store information list 187 based on the table data. According to the status (presence/absence of entry in the purchase number entry box 184, presence/absence of registered address, etc.), each field in the store information list 187 is calculated. The image of the store information list 187 is created based on the table data. The store retrieval screen 181 thus appears with that image arranged in the store information display area 186.

The flow then advances to S5.

In S5, a determination is made on whether or not the address specification button 204 on the store retrieval screen 181 is chosen. When it is determined that the address specification button 204 is chosen (S5: YES), the flow goes to S6. When it is determined that the address specification button 204 is unchosen (S5: NO), the flow advances to S7.

In S6, the address specification processing is executed. After completion of this processing, the flow goes back to S4 to repeat the above steps.

Here, the explanation of the main processing in the client PC 2 explained referring to Fig. 14 is suspended to explain below the address specification processing in the client PC 2 referring to Fig. 15.

In S20, a determination is made on whether the user's registered address has ever been set by using the address specification screen 220. This is judged based on whether there is a registered address in the HDD 35. If there is a registered address stored in the HDD 35, it is determined that the registered address has ever been set. In this case, the first-address map request including the registered address is transmitted to the management server 4. Upon receipt of this request, the management server 4 sends back the map image centered on the location defined by the address and the information on the address the same as that previously transmitted to the management server 4. The client PC 2 causes the monitor 13 to display the address specification screen 220 including the map display section 225 showing the received map image and the display range indication section 224 indicating the returned address with the term "Vicinity of".

If there is no registered address stored in the HDD 35, it is determined that the registered address has never been set. In this case, on the monitor 13, the address specification screen 220 is displayed with the display range indication section 224 indicating nothing and the map display section 225 remaining blank. The flow then advances to S21.

In S21, a determination is made on whether or not the retrieval button 223 is clicked. If the retrieval button 223 is clicked (S21: YES), the flow goes to S22. If the retrieval button 223 is not clicked (S21: NO), on the other hand, the flow goes to S23.

In S22, the address retrieval processing is executed. In this processing, the first-address map request including the address entered in the address entry box 222 is first transmitted to the management server 4 via the communication I/F part 32. Upon receipt of this request, the management server 4 sends back the map image centered on the location defined by the address and the information on the address the same as that previously transmitted to the management server 4. The CPU of the client PC 2 receives the image and information via the communication I/F part 32 and accordingly updates the address specification screen 220 to display the received map image in the map display section 225 and the returned address with the term "Vicinity of in the display range indication section 224. Thereafter, the flow returns to S20 to repeat the aforementioned processings.

In S23, a determination is made on whether or not the map move button (upper button 226, lower button 227, left button 228, right button 229) is clicked. If it is determined that the map move button is clicked (S23: YES), the flow goes to S24. If it is determined that the map move button is not clicked (S23: NO), the flow goes to S25. In S24, the display of the map display section 225 on the address specification screen 220 is updated. Specifically, the CPU of the client PC 2 transmits the third-address map request including the moving direction and amount (distance) of the area to be displayed to the management server 4. In response thereto, the management server 4 sends back the image of a map after movement to the client PC 2. The CPU of the client PC 2 updates the address specification screen 220 to display the received map image in the map display section 225. Then, the flow returns to S20 to repeat the aforementioned processings.

In S25, a determination is made on whether or not the OK button 230 is clicked. If it is determined that the OK button 230 is clicked (S25: YES), the flow goes to S26. If it is determined that the OK button 230 has not been clicked (S25: NO), the flow goes to S28. In S26, the address of the location pointed out by the mark 232 is stored as a registered address in the HDD 35. If there is a registered address previously stored in the HDD 35, it is updated to the address of the location currently pointed out by the mark 232. The address of the location pointed out by the mark 232 also matches the address indicated in the display range indication section 224. The address specification screen 220 is closed. The flow then advances to S27.

In S27, the nearest station specification screen not shown appears in place of the address specification screen 220. The nearest station specification screen is used to set the nearest station of public transport to the address set in the address specification screen 220, as mentioned above. For a bus, the names of a bus company, a bus line, and a bus stop are set. For a railroad, the names of a railroad company, a railroad line, and a railroad station are set. The settings are stored as the registered station information in the HDD 35. If there is a registered station information previously stored in the HDD 35, it is updated to the current one. Then, the address specification processing is terminated and the flow goes back to S4 of the main processing in Fig. 14.

In S28, a determination is made on whether or not the "Cancel" button 231 is clicked. If it is determined that the "Cancel" button 231 is clicked (S28: YES), the address specification processing is terminated and the flow goes back to S4 of the main processing in Fig. 14. If it is determined that the "Cancel" button 231 is not clicked (S28: NO), the flow goes to S29.

In S29, other processings are executed; for example, the processing of entering texts in the address entry box 222 and the processing of specifying an address by dragging the mark 232 on the map display section 225.

In the address specification processing by dragging, the CPU of the client PC 2 transmits the second-address map request including the moving direction and amount (distance) of the mark 232 to the management server 4 through the communication I/F part 32. Upon receipt of this request, the CPU of the management server 4 searches the map database stored in the HDD 35 under the map retrieval program stored in the HDD 35 to retrieve a map image of a predetermined range centered on the central address temporarily stored. The address of the location defined by the moving direction and amount (distance) of the mark 232 is determined by the address conversion program. The address pointed out by the mark 232 is temporarily stored as a marked address. Accordingly, the map image is created by overlapping the image of the mark 232 on the map image so that the apex of the mark 232 points out the marked address and the concerned zone pointed out by the mark 232 is filled in with color. The management server 4 sends the thus created map image to the client PC 2 that transmitted the second-address map request through the communication I/F part 52.

Thereafter, the flow goes back to S21 to repeat the aforementioned processings.

Returning to Fig. 14, the main processing is explained again.

In S7, a determination is made on whether or not the map button 202 is clicked validly on the store retrieval screen 181 as shown in Fig. 9. In other words, a determination is made on whether or not the map button 202 is clicked in a state that the address has already been set by the address specification button 204 and any record is chosen from the store information list 187 in the store information display area 186. If it is determined that the map button 202 is clicked validly (S7: YES), the flow advances to S8. If it is determined that the map button 202 has not been clicked validly (S7: NO), the flow goes to S9. In S8, the map route display processing is executed. Here, the explanation of the main processing referring to Fig. 14 is suspended to explain below the map-route display processing referring to Fig. 16.

In the map-route display processing, as indicated in S30, the CPU of the client PC 2 transmits the store map request including the store name to the management server 4 via the communication I/F part 32. Upon receipt of this request, the management server 4 sends back the map image combined with the store name via the communication I/F part 32. When received the map image via the communication I/F part 32, the CPU of the client PC 2 displays the store map screen as shown in Fig. 11. The flow then advances to S31.

In S31, a determination is made on whether or not the route button 244 labeled "Display a Route" is clicked. If it is determined that the route button 244 is clicked (S31: YES), the flow goes to S32. If it is determined that the route button 244 has not been clicked (S31: NO), the flow goes to S33.

In S32, the route display processing is executed to display a route. The CPU of the client PC 2 transmits the route request including the store name and the registered station information to the management server 4 via the communication I/F part 32. In response thereto, the management server 4 sends back the information on the route from the nearest station set in the nearest station specification screen not shown to the station nearest the store. The CPU of the client PC 2 then displays the route display screen to show the route from the station nearest the address set by the user to the station nearest the store.

Referring to the station nearest the user address registered as the registered station information and the transportation information field 104 of the record 101 in the store information table (see Fig. 6) corresponding to the store chosen on the store retrieval screen 181, the management server 4 searches the route database under the route retrieval program and displays the transportation, the station name, and others needed for the user to go from the nearest station to the store. The route display screen includes the "Close" button not shown. Determination is made on whether or not this Close button is clicked. If it is determined that the Close button is clicked, the route display screen is closed and the flow goes back to S31. If it is determined that the Close button is not clicked, the determination whether or not this Close button is clicked is repeated.

In S33, a determination is made on whether or not the "Close" button 245 in Fig. 11 is clicked. It is determined that the Close button 245 is clicked (S33: YES), the map-route display processing is terminated and the flow returns to S5 of the main processing in Fig. 14. If it is determined that the Close button 245 has not been clicked (S33: NO), the flow returns to S31 to repeat the above processing.

Returning to Fig. 14, the main processing is explained again.

In S9, a determination is made on whether or not the purchase button 201 is clicked validly on the store retrieval screen 181 as shown in Fig. 9. In other words, a determination is made on whether or not the purchase button 201 is clicked in a state that the address has already been set by the address specification button 204, any record is chosen from the store information list 187 in the store information display area 186, and any numeric value is entered in the purchase number entry box 184.

If it is determined that the purchase button 201 is clicked validly (S9: YES), the flow goes to S10. If it is determined that the purchase button 201 has not been clicked validly (S9; NO), the flow goes to S11.

In S10, the purchase processing is executed. Here, the explanation of the main processing referring to Fig. 14 is suspended to explain the purchase processing referring to Fig. 17.

In S40, the CPU of the client PC 2 creates the purchase information specifying the order for the media based on the user ID and PASSWORD and the chosen store name and the type and number of the media to be purchased, and sends the created purchase information to the management server 4 via the communication I/F part 32. The management server 4 makes a user authentication based on the user ID and PASSWORD. If the user is unauthenticated, the management server 4 sends back the information representing that the order is not accepted validly to the client PC 2. If the user is authenticated successfully, on the other hand, the management server 4 then sends back the information representing whether or not the order matching the purchase information is accepted validly to the client PC 2.

In S41, the client PC 2 receives either information mentioned above via the communication I/F part 32 and, based on the received information, judges whether the purchase is accepted successfully. If the received information indicates the successful acceptance of the order (S41: YES), the flow goes to S42. If the received information indicates the unsuccessful acceptance of the order (S41: NO), the flow goes to S44.

In S42, the purchase processing screen 260 as shown in Fig. 12 appears, showing the successful completion of purchase. The flow then advances to S43.

In S43, the information on the purchase just completed is recorded in the purchaser history of the memory 34. The purchase processing is terminated and the flow goes back to S5 of the main processing shown in Fig. 14.

In S44 following the negative determination in S41 that the received information indicates the unsuccessful acceptance of the order (S41: NO), the purchase processing screen 260 appears to indicate that the purchase is unaccepted. Thus, the purchase processing is terminated and the flow goes back to S5 of the main processing shown in Fig. 14.

In S11 in Fig. 14, a determination is made on whether or not the history button 203 is clicked. If it is determined that the history button 203 is clicked (S11: YES), the flow goes to S12. If it is determined that the history button 203 has not been clicked (S11: NO), the flow goes to S13. In S12, the purchase history display processing is executed. Here, the explanation of the main processing referring to Fig. 14 is suspended to explain the history display processing referring to Fig. 18.

In S50, as shown in Fig. 18, the purchase history not shown is retrieved from the memory 34. The flow then advances to S51.

In S51, the purchase history screen 280 as shown in Fig. 13 is displayed based on the retrieved purchase history. It is then determined whether or not the map button 283 is clicked. If it is determined that the map button 283 is clicked, the store map screen 240 as shown in Fig. 11 appears (the explanation of the processing using the store map screen 240 is omitted).

The flow then advances to S52 following S51.

In S52, a determination is made on whether or not the OK button 284 is clicked. If it is determined that the OK button 284 is clicked (S52: YES), the purchase history screen 280 is closed and the history display processing is terminated. The flow goes back to S5 of the main processing in Fig. 14.

If it is determined that the OK button 284 has not been clicked (S52: NO), the determination in S52 is repeated.

Returning to Fig. 14, the main processing is explained again.

In S13, a determination is made on whether or not the entered value in the purchase number box 184 on the store retrieval screen 181 as shown in Fig. 9 is changed. If it is determined that the entered value is changed (S13: YES), the flow goes to S14. If it is determined that the entered value has not been changed (S13: NO), the flow goes to S16.

In S14, in the record of each store shown in the store information list 187 displayed in the store information display area 186, recalculation is made in the total amount field 194 and the total amount including transportation cost field 196. In the total amount field 194 of each record, recalculation is made by multiplying the amount indicated in the price field 192 by the value in the purchase number entry box 184. In the total amount including transportation cost field 196, recalculation is made by adding the resultant value of the multiplication and the value of the transportation cost (shipping cost) field 195. Successively, the flow advances to S15.

In S15, the store retrieval screen 181 containing the updated store information list 187 and purchase section 200 appears again. The flow goes back to S5 to repeat the above steps.

In S16 following the negative determination in S13 that the entered value has not been changed (S13: NO), a determination is made on whether or not the store choice is changed in the store information list 187 on the store retrieval screen 181 in association with changing of the chosen record. If it is determined that the store choice is changed (S16: YES), the flow goes to S15. If it is determined that the store has not been changed (S16: NO), the flow goes to S17. In S15, the store retrieval screen 181 including the updated purchase section 200 appears again. The flow then goes back to S5 to repeat the above steps.

In S17, a determination is made on whether or not the choice of media in the media choice section 183 on the store retrieval screen 181 is changed. It is determined that the choice of media is changed (S17: YES), the flow goes back to S4 to repeat the above steps. If it is determined that the choice of media has not been changed (S17: NO), the flow goes to S18.

In S18, it is judged whether or not the processing is terminated. This judgment is made based on whether or not the Close button 205 is clicked on the store retrieval screen 181. If the Close button 205 is clicked, it is determined that the processing is terminated, closing the store retrieval screen 181 and exiting the store retrieval application 180. The printer driver 150 continuously waits ready up to next print request.

The processings in the management server 4 are explained below referring to Fig. 19. All of the processings are executed in the CPU not shown of the control circuit 55.

In S60, a determination is made on whether or not various requests from external devices such as the client PC 2 and the inventory control in store PC 5 are received via the communication I/F part 52. If it is determined that any request is received (S60: YES), the flow goes to S61. If it is determined that no request is received (S60: NO), the determination in S60 is repeated.

In S61, a determination is made on whether or not the media list request including the name of manufacturer is received from the client PC 2. If the media list request is received (S61: YES), the flow goes to S62. If the media list request is not received (S61: NO), the flow goes to S64.

In S62, the media list data is acquired. Specifically, the model information database has previously stored the model information tables (see Fig. 7) classified by manufacturer and further by product group such as digital multifunction machine, printer, facsimile machine, and electronic stationery. The model information tables for all of the product groups belonging to the specified manufacturer are retrieved from the database and processed into single media list data. The flow successively goes to S63.

In S63, the media list data is transmitted to the client PC 2 that has sent the media list request via the communication I/F part 52. The flow then goes back to S60 to repeat the aforementioned processings.

In S64, a determination is made on whether or not the received request is the store information request. If it is determined that the received request is the store information request (S64: YES), the flow goes to S65. If it is determined that the received request is not the store information request (S64: NO), the flow goes to S67.

In S65, the name of media, the name of product group using the media, the name of manufacturer of the media, the user registered address, and the registered station information are first acquired from the store information request. In the store information database, the store information tables (see Fig. 6) has already been stored in such a manner that the tables are classified by manufacturer and further by product group such as digital multifunction machine, printer, facsimile machine, and electronic stationery.

Subsequently, the store information table (see Fig. 6) that matches the name of manufacturer and the name of product group acquired from the store information request is retrieved. The store near the registered address is retrieved from the store information table. Based on the retrieved data, the table data for displaying the store information list 187 in the store information display area 186 is created. The table data includes the stock information, store name, store address, media unit price, transportation cost (shipping cost), and time required. The transportation cost and time required are retrieved from the route database not shown under the route retrieval program stored in the HDD 35 for determining routes and costs needed for transportation between two specified locations. The flow then goes to S66.

In S66, the aforementioned table data is transmitted to the client PC 2 that transmitted the store information request via the communication I/F part 52. The flow returns to S60 to repeat the steps.

In S67, a determination is made on whether or not the map request comes in. As the map request, there are four types; store map request, first-address map request, second-address map request, and third-address map request. The determination is made on which type is the request that comes in. After that, the flow goes to S68.

In S68, the processing appropriate for the received request is executed.
(1) The case where the store map request comes in is explained below. The store map request includes the name of product group, the name of manufacturer, and the store name. Firstly, the store information table (see Fig. 6) that matches the name of manufacturer and the name of product group is acquired. The store information table is then subject to a search for the store name. Referring to the store name, a record 101 that matches the store name is retrieved from the store information table (see Fig. 6), and the map image for the map image field 106 is acquired therefrom. The flow goes to S69.
(2) The case where the first-address map request comes in is explained. The first-address map request includes the registered address. The map image of a predetermined range centered on the registered address is retrieved from the map database stored in the HDD 35 under the map retrieval program stored in the HDD 35. Further, the image of the downward wedge-shaped mark 232 is combined to overlap the map image so that the apex of the mark 232 points out the center of the map image. In the resultant map image, the zone pointed out by the apex of the mark 232 is filled in with color. The registered address is temporarily stored as the central address representing the center of the map. The registered address is also temporarily stored as the address indicated by the mark 232 (referred to as a marked address). Such temporal storage will be deleted if no access comes in from the client PC 2 for a predetermined time. Then, the flow goes to S69.
(3) The case where the second-address map request comes in is explained. The second-address map request includes the moving direction and amount (distance) of the mark 232. The map image of a predetermined range centered on the central address temporarily stored is retrieved from the map database stored in the HDD 35 under the map retrieval program stored in the HDD 35. The address of the location defined by the moving direction and amount (distance) of the mark 232 is determined by the address conversion program. The address pointed out by the mark 232 is temporarily stored. The image of the mark 232 is combined to overlap the map image so that the apex of the mark 232 points out the marked address. In the resultant map image, the zone pointed out by the apex of the mark 232 is filled in with color. The flow then goes to S69.
(4) The case where the third-address map request comes in is explained. The third-address map request includes the moving direction and amount (distance) of the area to be displayed. Based on the moving direction and amount (distance) of the area to be displayed under the address conversion program, a new central address is determined. The map image of a predetermined range centered on the central address is retrieved from the map database stored in the HDD 35 under the map retrieval program stored in the HDD 35. The image of the mark 232 is combined to overlap the map image so that the apex of the mark 232 points out the marked address temporarily stored. In the resultant map image, the zone pointed out by the apex of the mark 232 is filled in with color. The flow then goes to S69.

In S69, the return processing of the map image appropriate for the received request is executed.
(1) The return processing to be executed when the store map request comes in is explained. Specifically, the map image acquired in S68 is transmitted to the client PC 2 that transmitted the store map request via the communication I/F part 52. Then, the flow goes to S60 to repeat the processing.
(2) The return processing to be executed when the first-address map request comes in is explained. Specifically, the map image acquired in S68 and the registered address transmitted as the parameter from the client PC 2 is transmitted to the client PC 2 that transmitted the first-address map request via the communication I/F part 52. Then, the flow goes to S60 to repeat the processing.
(3) The return processing to be executed when the second-address map request comes in is explained. Specifically, the map image acquired in S68 is transmitted to the client PC 2 that transmitted the second-address map request via the communication I/F part 52. Then, the flow goes to S60 to repeat the processing.
(4) The return processing to be executed when the third-address map request comes in is explained. Specifically, the map image acquired in S68 is transmitted to the client PC 2 that transmitted the third-address map request via the communication I/F part 52. Then, the flow goes to S60 to repeat the processing.

In S70, a determination is made on whether or not the received data is the purchase information. If it is determined to be the purchase information (S70: YES), the flow goes to S71. If it is determined to be not the purchase information (S70: NO), the flow goes to S73.

In S71, authentication is made based on the ID and PASSWORD. If the result of the authentication is successful, the purchase information is forwarded to the inventory control in-store PC 5 corresponding to the store name included in the purchase information via the communication I/F part 52. In response thereto, the concerned inventory control in-store PC 5 that receives the purchase information sends back the information as to whether or not the order is accepted. The CPU of the management server 4 receives that information via the communication I/F part 52. Thereafter, the flow goes to S72.

If the result of the authentication is unsuccessful, on the other hand, the flow goes to S72 without making the purchase processing.

If the result of the authentication is successful in S71, in S72, the information as to whether or not the order from the inventory control in-store PC 5 is accepted successfully is transmitted via the communication I/F part 52 to the client PC 2 that transmitted the purchase information to the management server 4. If the result of the authentication is unsuccessful in S71, the information indicating that the unsuccessful result of the authentication is transmitted via the communication I/F. part 52 to the client PC 2 that transmitted the purchase information. Then, the flow returns to S60 to repeat the above steps.

In S73 following the negative determination in S70 that the received data is not the purchase information (S70: NO), a determination is made on whether or not the received data is the termination request. If it is determined that the received data is the termination request (S73: YES), the termination processing is executed to terminate the main processing in the management server 4. If it is determined that the received data is not the termination request (S73: NO), the flow goes to S74.

In S74, other processings are executed. These other processings include a processing of creating route data by retrieving data from the route retrieval database under the route retrieval program if the route retrieval request comes in via the communication I/F part 52, and determining the route and cost for transportation between two specified locations, and transmitting that information to the client PC 2 that transmitted the route retrieval request. The flow then returns to S60 to repeat the above steps.

The inventory control in-store PC 5 is configured to transmit the stock (inventory) information of the media to the management server 4 in response to a request for the stock information of the media from the management server 4. Further, the inventory control in store PC 5 is configured to execute the purchase processing in response to the purchase information from the management server 4 and also to executes the purchase processing in response to the purchase information and then return a result thereof to the management server 4.

When the client PC 2 in the present embodiment transmits the user registered address and registered station information to the management server 4 via the communication I/F part 32, the PC 2 receives the store information acquired by searching based on the user registered address and registered station information from the management server 4 via the communication I/F part 32. Specifically, this store information includes store names, unit prices of consumable supplies, stock information, store addresses for an actual store, and travel time required to go to a station nearest the actual store from a station nearest a user address. Further, if a store adopts online sales, the store information includes shipping hours (days) required for delivering a tape cassette to be purchased to a user, a shipping cost of that tape cassette. If a store adopts store sales, the store information includes a transportation cost to go to a station nearest the actual store from a station nearest the user address. The above store information for each store is displayed on the monitor 13 in list form.

Accordingly, the above configuration can provide a user with necessary information to purchase supplies in either selling mode; one is to go to a store (store sales) and the other is to utilize online sales, according to the necessity of immediate purchase of the supplies. The client PC 2 is therefore available for the order system 1 to display store information for each store in list form and enable actual order with ease. For the online sales, it is possible to show the user shipping hours (days) to deliver the tape cassette the user buys online and a shipping cost of that tape cassette. For the store sales, it is possible to show the user a transportation cost charged between a station nearest the user address and a station nearest the store of the selling agent.

In the client PC 2 in the present embodiment, the store retrieval screen 181 displays the stores in list form in response to entry of the number and type of tape cassettes to be purchased. Specifically, for the online sales, the list includes a total amount (the total amount including transportation cost field) obtained by summing an amount of money calculated by multiplying a unit price of a tape cassette by the purchase number and the shipping cost. For the store sales, the list includes a total amount (the total amount including transportation cost field) obtained by summing an amount calculated by multiplying a unit price of a tape cassette by the purchase number and the transportation cost.

Accordingly, it is possible to provide the user with the total amount charged for purchase of the tape cassette(s) without needing own calculation for himself in either selling mode, store sales or online sales.

In creating the purchase information in response to an order for supplies with a specification of a store from any stores whose store information the client PC 2 receives via the communication I/F part 32, the client PC 2 in the present embodiment specifies an order for a tape cassette of the same type as that of the tape cassette mounted in the tape printer 3, which type information the client PC 2 receives via the USB port 33.

This makes it possible for the user to skip a process of choosing the type of a tape cassette in creating the purchase information. Further, it is possible to avoid any erroneous order for a tape cassette of different type from a desired one.

The present invention may be embodied in other specific forms without departing from the essential characteristics thereof.

For instance, the supplies in the above embodiment are explained as a tape cassette but may be any form; e.g., a roll cassette with rolled paper, a stamp, and a paper cassette.

Each button may be chosen by key input of a parenthesized alphabet with "( )" on each button as well as click with the mouse 15 thereon.

While the preferred embodiment has been shown and described, it is to be understood that this disclosure is for the purpose of illustration and that various changes and modifications may be made without departing from the scope of the invention as set forth in the appended claims.

## Claims

1. A system (1) for ordering consumable supplies, the system comprising a terminal device (2) arranged to place an order for consumable supplies to be used in a printer (3), and a server (4) connected to the terminal device (2) via a network, wherein
the terminal device (2) includes:
a display device (31) that displays various kinds of information;
an information transmitting device (32) that transmits information on a type of a supply to be purchased and position information on a predetermined location to the server (4);
a store information receiving device (32) that receives store information on stores that sell the supply to be purchased, the information being transmitted from the server (4);
a stock check device (36) that displays the store information on each store in list form on the display device (31);
an ordering device (36) that creates purchase information that specifies one from among the stores on which store information received by the store information receiving device (32) and specifies the order for the supply to the specified store; and
a purchase information transmitting device (32) that transmits the purchase information created by the ordering device (36) to the server (4);
the server (4) includes a store information acquiring device (55) that acquires the store information on stores that sell the supply to be purchased based on the information on the type of supply to be purchased and the position information on the predetermined location, the type information and the position information having been received from the terminal device (2), and
the store information includes:
for stores that do not adopt online sales, the name of each store that sells the supply, a unit price of the supply, information on stocks of the supply, information on a position of each store and a travel time from the predetermined location to each store, and
for stores that adopt online sales, the name of each store that sells the supply, a unit price of the supply, information on stocks of the supply, shipping hours required to deliver the supply to be purchased, and a shipping cost of the supply to be purchased, and if the stores also adopt store sales, information on a transportation cost required from the predetermined location to each store.

2. The system (1) for ordering consumable supplies, according to claim 1, wherein
the terminal device (2) includes an input device (30) with which the type and the number of supplies to be purchased are entered; and
when the type and the number of supplies entered with the input device (30), the stock check device (36) displays a list of the stores each including a total amount calculated by adding an amount determined by multiplying the unit price of the supply by the number of supplies and one of the shipping cost for the store adopting online sales and the transportation cost for the stores adopting store sales.

3. The system (1) for ordering consumable supplies, according to claim 1 or 2, wherein
the printer (3) is connected to the terminal device (2), and
the terminal device (2) includes a acquiring device (36) arranged to acquire the information on the type of a consumable supply currently mounted in the printer (3),
the information on the type of the consumable supply to be purchased, which is transmitted by the information transmitting device (32), is the information on the type of the consumable supply acquired by the acquiring device (36).

4. A terminal device (2) arranged to place an order for consumable supplies to be used in a printer (3), the terminal device (2) comprising:
a display device (31) that displays various kinds of information;
an information transmitting device (32) that transmits information on a type of a supply to be purchased and position information on a predetermined location to the server (4) via a network;
a store information receiving device (32) that receives store information on stores that sell the supply to be purchased, the store information being acquired by the server (4);
a stock check device (36) that displays the store information on each store in list form on the display device (31);
an ordering device (36) that creates purchase information that specifies one from among the stores on which store information received by the store information receiving device (32) and specifies the order for the supply to the specified store; and
a purchase information transmitting device (32) that transmits the purchase information created by the ordering device (36) to the server (4);
the store information includes:
for stores that do not adopt online sales, the name of each store that sells the supply, a unit price of the supply, information on stocks of the supply, information on a position of each store and a travel time from the predetermined location to each store, and
for stores that adopt online sales, the name of each store that sells the supply, a unit price of the supply, information on stocks of the supply, shipping hours required to deliver the supply to be purchased, and a shipping cost of the supply to be purchased, and if the stores also adopt store sales, information on a transportation cost required from the predetermined location to each store.

5. The terminal device (2) according to claim 4 further comprising an input device (30) with which the type and the number of the supplies to be purchased are entered;
when the type and the number of supplies entered with the input device (30), the stock check device (36) displays a list of the stores each including a total amount calculated by adding an amount determined by multiplying the unit price of the supply by the number of supplies and one of the shipping cost for the store adopting online sales and the transportation cost for the stores adopting store sales.

6. The terminal device (2) according to claim 4 or 5 further comprising an acquiring device (36) arranged to acquire the information on the type of a consumable supply currently mounted in the printer (3),
the information on the type of the consumable supply to be purchased, which is transmitted by the information transmitting device (32), is the information on the type of the consumable supply acquired by the acquiring device (36).

7. A computer program product to be used and executed in a terminal device (2) arranged to place an order for consumable supplies to be used in a printer (3), and the computer program product comprising:
a recording medium readable by the terminal device (2); and
a computer program stored in the recording medium readable by the terminal device (2);
wherein the computer program comprises the steps of:
transmitting (S4) information on the type of the consumable supply to be purchased and position information on a predetermined location to a server (4) connected to the terminal device (2) via a network;
receiving (S4) store information on the stores that sell the supply to be purchased, the information being acquired by the server (4);
displaying (S4) the store information on each store in list form;
creating and ordering (S40) purchase information that specifies one from among the stores on which store information received and an order for the supply to the specified store; and
sending (S40) the created purchase information to the server (4);
the store information includes:
for stores that do not adopt online sales, the name of each store that sells the supply, a unit price of the supply, information on stocks of the supply, and if the stores adopt store sales, information on a position of each store and a travel time from the predetermined location to each store, and
for stores that adopt online sales, the name of each store that sells the supply, a unit price of the supply, information on stocks of the supply, shipping hours required to deliver the supply to be purchased, and a shipping cost of the supply to be purchased, and if the stores also adopt store sales, information on a transportation cost required from the predetermined location to each store.

8. The computer program product according to claim 7, wherein the displaying step (S4) includes displaying, when the type and the number of purchase supplies entered, a list of the stores each including a total amount calculated by adding an amount determined by multiplying the unit price of the supply by the number of supplies and one of the shipping cost for the store adopting online sales and the transportation cost for the stores adopting store sales.

9. The computer program product according to claim 7 or 8 further comprising the step of acquiring the information on the type of the consumable supply currently mounted in the printer (3),
wherein the information on the type of the consumable supply to be purchased, which is transmitted in the information transmitting step (S4), is the information on the type of consumable supply acquired in the acquiring step (S3).
